# EUROPEAN PATENT APPLICATION

(11) **EP 4 228 334 A1**
(43) Date of publication of application: **16.08.2023**
(21) Application number: 21885252.3
(22) Date of filing: 28.10.2021
(51) Int. Cl.: H04W 52/02

(54) **COMMUNICATION METHOD AND APPARATUS**

(30) Priority: 31.10.2020 CN 202011198963
(71) Applicant: Huawei Technologies Co., Ltd., Shenzhen, Guangdong 518129 (CN)
(72) Inventor: WANG, Jun, Shenzhen, Guangdong 518129 (CN); LYU, Yongxia, Shenzhen, Guangdong 518129 (CN); WANG, Ting, Shenzhen, Guangdong 518129 (CN); MA, Jianglei, Shenzhen, Guangdong 518129 (CN)
(74) Representative: Epping - Hermann - Fischer
(86) International application number: PCT/CN2021/126993
(87) International publication number: WO 2022/089525

(57) **Abstract**

Embodiments of this application provide a communication method and apparatus, to resolve problems of high costs, high chip complexity, a complex signaling procedure, and high signaling overheads during large-scale production of various terminal devices as services become diversified. The method includes: receiving configuration information, where the configuration information is used to configure a communication mode, and the communication mode includes a first mode; and communicating with an access network device in the first mode. In embodiments of this application, the communication mode of the terminal device can be flexibly configured, so that a function of the terminal device can match a service. In this way, flexibility of designing and manufacturing a chip of the terminal device can be improved, complexity of designing and manufacturing the chip can be reduced, and production costs during large-scale production of the various terminal devices can be further reduced.

## Description

### CROSS-REFERENCE TO RELATED APPLICATIONS

This application claims priority to Chinese Patent Application No. 202011198963.9, filed with the China National Intellectual Property Administration on October 31, 2020 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Three states are defined in new radio (new radio, NR), including an idle (idle) state, an inactive (inactive) state, and a connected (connected) state. Currently, in the idle state, a terminal device cannot receive or send data. If the terminal device needs to receive or send the data, the terminal device needs to enter the connected state. In the inactive state, the terminal device cannot receive or send the data either.

Currently, a main scenario studied in NR is an enhanced mobile broadband service (enhanced mobile broadband, eMBB). Physical layer capabilities are defined for the eMBB, including data transmission methods and procedures in the connected state. In scenarios such as ultra-reliable and low-latency communication (ultra-reliable and-low latency communication, URLLC) or a narrow band internet of things (narrow band internet of things, NB-IoT), physical layer functions are further improved and optimized based on functions defined by the eMBB.

With development of the industry, in addition to the eMBB, other types of services are generated, such as the URLLC, the NB-IoT, customer premises equipment (customer premises equipment, CPE), and vehicle-to-everything (vehicle-to-everything, V2X). As services become diversified, costs are high during large-scale production of various terminal devices, chip complexity is high, a signaling procedure is complex, and signaling overheads are high.

### SUMMARY

Embodiments of this application provide a communication method and apparatus, to resolve problems of high costs, high chip complexity, a complex signaling procedure, and high signaling overheads during large-scale production of various terminal devices as services become diversified.

According to a first aspect, an embodiment of this application provides a communication method. The method may be applied to a terminal device, or a chip or a chipset in a terminal device. The method includes: receiving configuration information, where the configuration information is used to configure a communication mode, and the communication mode includes a first mode; and communicating with an access network device in the first mode. Compared with that in the conventional technology in which the chip of the terminal device needs to be designed based on a service of the terminal device, in this embodiment of this application, a communication mode of the terminal device may be flexibly configured, so that a function of the terminal device can match the service. Therefore, flexibility of designing and manufacturing the chip of the terminal device can be improved, complexity of designing and manufacturing the chip can be reduced, and production costs during large-scale production of various terminal devices can be reduced.

In a possible design, the first mode is an idle state, an inactive state, or a connected state, or the first mode is having a radio resource control (radio resource control, RRC) connection or having no RRC connection. Signaling overheads of mode switching can be reduced by using the foregoing design.

In a possible design, communicating with the access network device in the first mode in two communication modes may be communicating with the access network device based on an RRC state of the first mode.

In a possible design, the configuration information includes at least one piece of the following information in the first mode: a function set, a function parameter, and a resource parameter. According to the foregoing design, a function, a transmission resource, and the like of the terminal device can be flexibly customized.

In a possible design, the function set includes at least one of the following functions: downlink scheduling, a downlink channel state information feedback, uplink scheduling, uplink sounding reference signal transmission, timing advance synchronization, power headroom report reporting, a random access channel, a logical channel priority, a hybrid automatic repeat request feedback, terminal context storage, mobility, a dual active protocol stack, conditional handover, a high rate, energy saving, an industrial internet of things, reliability, uplink coverage enhancement, small data transmission, service isolation, multicast, a non-terrestrial network, a self-optimization network/minimization of drive test, and vehicle-to-everything. The foregoing functions are customized, so that a communication mode of the terminal device can better match a service of the terminal device.

In a possible design, communicating with the access network device in the first mode of the two communication modes may be performing the function set, the function parameter, and the resource parameter that correspond to the first mode.

In a possible design, before the configuration information is received, a type of the terminal device may be reported. The type of the terminal device is a type obtained through classification based on a service feature of the terminal device, or a type obtained through classification based on a quality of service level of a service of the terminal device. According to the foregoing design, the communication mode of the terminal device can be configured based on the type of the terminal device, so that flexibility of the chip of the terminal device can be improved, and complexity of the chip can be reduced.

In a possible design, the communication mode further includes a second mode, and the second mode is different from the first mode. In the foregoing design, two or more modes may be configured for the terminal device, so that the terminal device can flexibly switch between different modes.

In a possible design, it is determined that a mode switching condition is met, where the mode switching is switching from the first mode to the second mode, or the mode switching is switching from the second mode to the first mode. Mode switching is performed. In the foregoing design, the terminal device may switch the mode by itself. Compared with that in a case in which the access network device indicates the terminal device to perform switching, signaling overheads can be reduced.

In a possible design, the configuration information further includes the condition for switching between the first mode and the second mode. According to the foregoing design, the terminal device may perform mode switching based on the switching condition configured by the access network device.

In a possible design, a first message sent by the access network device is received, where the first message indicates to perform mode switching; and mode switching is performed, where the mode switching is switching from the first mode to the second mode, or the mode switching is switching from the second mode to the first mode. According to the foregoing design, the terminal device may also perform mode switching under an instruction of the access network device.

In a possible design, after the mode switching is performed, a response message of the first message may be further sent to the access network device. According to the foregoing design, consistency between the access network device and the terminal device can be maintained, so that communication quality can be improved.

In a possible design, before the configuration information is received, a second message is sent to the access network device, where the second message is used to request the configuration information. According to the foregoing design, the terminal device may actively request the configuration information.

According to a second aspect, an embodiment of this application provides a communication method. The method may be applied to an access network device, or a chip or a chipset in the access network device. The method includes: obtaining a type of a terminal device, and determining a communication mode of the terminal device based on the type of the terminal device, where the communication mode includes a first mode; and sending configuration information to the terminal device, where the configuration information is used to configure the communication mode. Compared with that in the conventional technology in which the chip of the terminal device needs to be designed based on a service of the terminal device, in this embodiment of this application, a communication mode of the terminal device may be flexibly configured based on the type of the terminal device, so that a function of the terminal device can match the service. Therefore, flexibility of designing and manufacturing the chip of the terminal device can be improved, complexity of designing and manufacturing the chip can be reduced, and production costs during large-scale production of various terminal devices can be reduced.

In a possible design, the first mode is an idle state, an inactive state, or a connected state, or the first mode is having an RRC connection or having no RRC connection. Signaling overheads of mode switching can be reduced by using the foregoing design.

In a possible design, the configuration information includes at least one piece of the following information in the first mode: a function set, a function parameter, and a resource parameter. According to the foregoing design, a function, a transmission resource, and the like of the terminal device can be flexibly customized.

In a possible design, the function set includes at least one of the following functions: downlink scheduling, a downlink channel state information feedback, uplink scheduling, uplink sounding reference signal transmission, timing advance synchronization, power headroom report reporting, a random access channel, a logical channel priority, a hybrid automatic repeat request feedback, terminal context storage, mobility, a dual active protocol stack, conditional handover, a high rate, energy saving, an industrial internet of things, reliability, uplink coverage enhancement, small data transmission, service isolation, multicast, a non-terrestrial network, a self-optimization network/minimization of drive test, and vehicle-to-everything. The foregoing functions are customized, so that a communication mode of the terminal device can better match a service of the terminal device.

In a possible design, the type of the terminal device is a type obtained through classification based on a service feature of the terminal device; or the type of the terminal device is a type obtained through classification based on a quality of service QoS level of a service of the terminal device. According to the foregoing design, the communication mode of the terminal device can be configured based on the type of the terminal device, so that flexibility of the chip of the terminal device can be improved, and complexity of the chip can be reduced.

In a possible design, the obtaining a type of a terminal device includes: receiving the type reported by the terminal device; receiving the type of the terminal device sent by a core network device; or determining the type of the terminal device based on a historical communication record of the terminal device.

In a possible design, the communication mode further includes a second mode, and the second mode is different from the first mode. In the foregoing design, two or more modes may be configured for the terminal device, so that the terminal device can flexibly switch between different modes.

In a possible design, the configuration information further includes a condition for switching between the first mode and the second mode. According to the foregoing design, the terminal device may perform mode switching based on the switching condition configured by the access network device.

In a possible design, a first message is sent to the terminal device, where the first message indicates to perform mode switching, and the mode switching is switch from the first mode to the second mode, or the mode switching is switching from the second mode to the first mode. According to the foregoing design, the terminal device may also perform mode switching under an instruction of the access network device.

In a possible design, after the first message is sent to the terminal device, a response message of the first message is received. According to the foregoing design, consistency between the access network device and the terminal device can be maintained, so that communication quality can be improved.

In a possible design, before the configuration information is sent to the terminal device, a second message from the terminal device is received, where the second message is used to request the configuration information. According to the foregoing design, the terminal device may actively request the configuration information.

According to a third aspect, this application provides a communication apparatus. The apparatus may be a communication device, or may be a chip or a chipset in a communication device. The communication device may be a terminal device or an access network device. The apparatus may include a processing unit and a transceiver unit. When the apparatus is a communication device, the processing unit may be a processor, and the transceiver unit may be a transceiver. The apparatus may further include a storage module, and the storage module may be a memory. The storage module is configured to store instructions. The processing unit executes the instructions stored in the storage module, so that the terminal device performs a corresponding function in the first aspect, or the processing unit executes the instructions stored in the storage module, so that the access network device performs a corresponding function in the second aspect. When the apparatus is a chip or a chipset in the communication device, the processing unit may be a processor, and the transceiver unit may be an input/output interface, a pin, a circuit, or the like. The processing unit executes instructions stored in a storage module, so that the terminal device performs a corresponding function in the first aspect, or the processing unit executes instructions stored in a storage module, so that the access network device performs a corresponding function in the second aspect. The storage module may be a storage module (for example, a register or a cache) in the chip or the chipset, or may be a storage module (for example, a read-only memory or a random access memory) outside the chip or the chipset in the base station.

According to a fourth aspect, an embodiment of this application provides a communication apparatus. The apparatus includes a communication interface and a processor. The communication interface is configured for communication between the apparatus and another device, for example, data or signal receiving and sending. For example, the communication interface may be a transceiver, a circuit, a bus, a module, or another type of interface, and the another device may be a network device. The processor is configured to invoke a group of programs, instructions, or data to perform the method described in the first aspect or the possible designs of the first aspect. The apparatus may further include a memory, configured to store the programs, the instructions, or the data invoked by the processor. The memory is coupled to the processor. When executing the instructions or the data stored in the memory, the processor may implement the method described in the first aspect or the possible designs of the first aspect.

According to a fifth aspect, an embodiment of this application provides a communication apparatus. The apparatus includes a communication interface and a processor. The communication interface is configured for communication between the apparatus and another device, for example, data or signal receiving and sending. For example, the communication interface may be a transceiver, a circuit, a bus, a module, or another type of interface, and the another device may be a terminal device. The processor is configured to invoke a group of programs, instructions, or data to perform the method described in the second aspect or the possible designs of the second aspect. The apparatus may further include a memory, configured to store the programs, the instructions, or the data invoked by the processor. The memory is coupled to the processor. When executing the instructions or the data stored in the memory, the processor may implement the method described in the second aspect or the possible designs of the second aspect.

According to a sixth aspect, an embodiment of this application further provides a computer-readable storage medium. The computer-readable storage medium stores computer-readable instructions, and when the computer-readable instructions are run on a computer, the method according to the first aspect, the second aspect, the possible designs of the first aspect, or the possible designs of the second aspect is performed.

According to a seventh aspect, an embodiment of this application provides a chip system. The chip system includes a processor, and may further include a memory, configured to implement the method in the first aspect, the second aspect, the possible designs of the first aspect, or the possible designs of the second aspect. The chip system may include a chip, or may include a chip and another discrete component.

According to an eighth aspect, an embodiment of this application provides a communication system, where the system includes a terminal device and an access network device, the terminal device is configured to perform the method in the first aspect or each possible design of the first aspect, and the access network device is configured to perform the method in the second aspect or each possible design of the second aspect.

According to a ninth aspect, a computer program product including instructions is provided. When the computer program product is run on a computer, the method in the first aspect, the second aspect, the possible designs of the first aspect, or the possible designs of the second aspect is performed.

According to a tenth aspect, an embodiment of this application provides a communication apparatus. The communication apparatus includes a processor; and when the processor executes a computer program or instructions in a memory, the method according to the first aspect is performed.

According to an eleventh aspect, an embodiment of this application provides a communication apparatus. The communication apparatus includes a processor; and when the processor executes a computer program or instructions in a memory, the method according to the second aspect is performed.

According to a twelfth aspect, an embodiment of this application provides a communication apparatus. The communication apparatus includes a processor and a memory. The memory is configured to store a computer program or instructions, and the processor is configured to execute the computer program or the instructions stored in the memory, so that the communication apparatus performs the corresponding method shown in the first aspect. According to a thirteenth aspect, an embodiment of this application provides a communication apparatus. The communication apparatus includes a processor and a memory. The memory is configured to store a computer program or computer-executable instructions, and the processor is configured to execute the computer program or the computer-executable instructions stored in the memory, so that the communication apparatus performs the corresponding method shown in the second aspect.

According to a fourteenth aspect, an embodiment of this application provides a communication apparatus. The communication apparatus includes a processor, a memory, and a transceiver. The transceiver is configured to receive a signal or send a signal, the memory is configured to store program code or instructions, and the processor is configured to invoke the program code or the instructions from the memory to perform the method according to the first aspect.

According to a fifteenth aspect, an embodiment of this application provides a communication apparatus. The communication apparatus includes a processor, a memory, and a communication interface. The communication interface is configured to receive a signal or send a signal, the memory is configured to store program code or instructions, and the processor is configured to invoke the program code or the instructions from the memory to perform the method according to the second aspect.

According to a sixteenth aspect, an embodiment of this application provides a communication apparatus. The communication apparatus includes a processor and an interface circuit. The interface circuit is configured to receive computer program code or instructions and transmit the computer program code or the instructions to the processor. The processor runs the computer program code or the instructions to perform the corresponding method shown in the first aspect.

According to a seventeenth aspect, an embodiment of this application provides a communication apparatus. The communication apparatus includes a processor and an interface circuit. The interface circuit is configured to receive computer program code or instructions and transmit the computer program code or the instructions to the processor. The processor runs the computer program code or the instructions to perform the corresponding method shown in the second aspect.

According to an eighteenth aspect, an embodiment of this application provides a communication apparatus. For example, the communication apparatus may be a chip, and the communication apparatus includes a logic circuit and an input/output interface. The input/output interface is used by the apparatus to communicate with another device, for example, input configuration information. The logic circuit is configured to run computer program code or instructions to perform the corresponding method shown in the first aspect.

According to a nineteenth aspect, an embodiment of this application provides a communication apparatus. For example, the communication apparatus may be a chip, and the communication apparatus includes a logic circuit and an input/output interface. The input/output interface is used by the apparatus to communicate with another device, for example, output configuration information. The logic circuit is configured to run computer program code or instructions to perform the corresponding method shown in the second aspect.

For technical effects brought by any implementation of the third aspect to the nineteenth aspect, refer to beneficial effects in the corresponding method provided above. Details are not described herein again.

### BRIEF DESCRIPTION OF DRAWINGS

FIG. 1 is a schematic diagram of a status of a terminal device according to an embodiment of this application;
FIG. 2 is a schematic diagram of state switching of a terminal device according to an embodiment of this application;
FIG. 3 is a schematic diagram of an architecture of a communication system according to an embodiment of this application;
FIG. 4 is a schematic diagram of an architecture of a communication system according to an embodiment of this application;
FIG. 5 is a schematic diagram of a protocol according to an embodiment of this application;
FIG. 6 is a schematic flowchart of a communication method according to an embodiment of this application;
FIG. 7 is a schematic diagram of a scenario of exchanging a type of a terminal device according to an embodiment of this application;
FIG. 8 is a schematic diagram of a function of a terminal device according to an embodiment of this application;
FIG. 9 is a schematic diagram of a communication mode according to an embodiment of this application;
FIG. 10 is a schematic diagram of a type and a corresponding function of a terminal device according to an embodiment of this application;
FIG. 11 is a schematic diagram of a communication mode according to an embodiment of this application;
FIG. 12 is a schematic diagram of a structure of a communication apparatus according to an embodiment of this application;
FIG. 13 is a schematic diagram of a structure of a communication apparatus according to an embodiment of this application; and
FIG. 14 is a schematic diagram of a structure of a chip according to an embodiment of this application.

### DESCRIPTION OF EMBODIMENTS

To facilitate understanding of embodiments of this application, the following describes terms related to embodiments of this application.
1. Enhanced mobile broadband (enhanced mobile broadband, eMBB): Based on an existing mobile broadband service scenario, the eMBB further improves performance such as user experience, for example, greatly improves a network speed.
2. Ultra-reliable and low-latency communication (ultra-reliable and low-latency communication, URLLC): The URLLC features high reliability, low latency, and high availability. The URLLC can be used in the following scenarios: industrial application and control, traffic safety and control, remote manufacturing, remote training, remote surgery, unmanned driving, and security industry.
3. Machine type communication (machine type communication, MTC): The MTC is also called M2M communication. The MTC features low costs and enhanced coverage. mMTC means large-scale internet of things services.
4. Narrow band internet of things (narrow band internet of things, NB-IoT): The NB-IoT features wide coverage, massive connections, a low rate, low costs, low power consumption, and an excellent architecture. For example, the NB-IoT features massive connections, lower power consumption, and lower chip costs. An NB-IoT technology can be applied to smart water meters, smart parking, smart pet tracking, smart bicycles, smart smoke detectors, smart toilets, and smart vending machines.
5. Customer premises equipment (customer premises equipment, CPE): The CPE is a mobile signal access device that receives a mobile signal and forwards the mobile signal through a wireless signal (for example, a wireless-fidelity (wireless-fidelity, Wi-Fi) signal), and is also a device that converts a communication signal (for example, a 4G signal or a 5G signal) into a Wi-Fi signal. The CPE supports a large quantity of mobile terminals that can access the internet at the same time. The CPE can be used in wireless network access scenarios, such as rural areas, towns, hospitals, organizations, factories, and residential communities, reducing costs of wired network deployment.
6. Augmented reality (augmented reality, AR): The AR is a technology used to calculate a location and an angle of an image of a camera in real time and add a corresponding image.
7. Virtual Reality (virtual reality, VR): The VR is a computer simulation system that can be used to create and experience a virtual world. The VR is used to generate a simulated environment through a computer. The VR is an interactive system simulation of 3D dynamic view and entity behavior based on multi-source information fusion, to enable a user to immerse in this environment.
8. Vehicle to everything (vehicle to everything, V2X): The V2X is a key technology in a future intelligent transportation system. The V2X technology implements communication between vehicles, between a vehicle and a base station, and between base stations. In this way, a series of traffic information such as a real-time road condition, road information, and pedestrian information can be obtained. This improves driving safety, reduces congestion, improves traffic efficiency, provides in-vehicle infotainment information, and the like.
9. Status of a terminal device: Three states are defined in NR, including an idle state, an inactive state, and a connected state.

The terminal device in the idle state may receive system information and a paging message (paging information), and perform cell selection/re-selection (cell selection/re-selection). In other words, the terminal device may maintain only a basic link to an access network device, and no RRC link is established between the terminal device and the access network device.

The terminal device in the inactive state may receive system information and a paging message, perform cell selection or re-selection, and may store context of the terminal device (UE context). The terminal device in the inactive state may maintain only a basic link to an access network device, and cannot perform data transmission and/or receiving, but retains the UE context.

There is an RRC link between the terminal device in the connected state and an access network device, and the terminal device in the connected state may perform data transmission and/or receiving with the access network device.

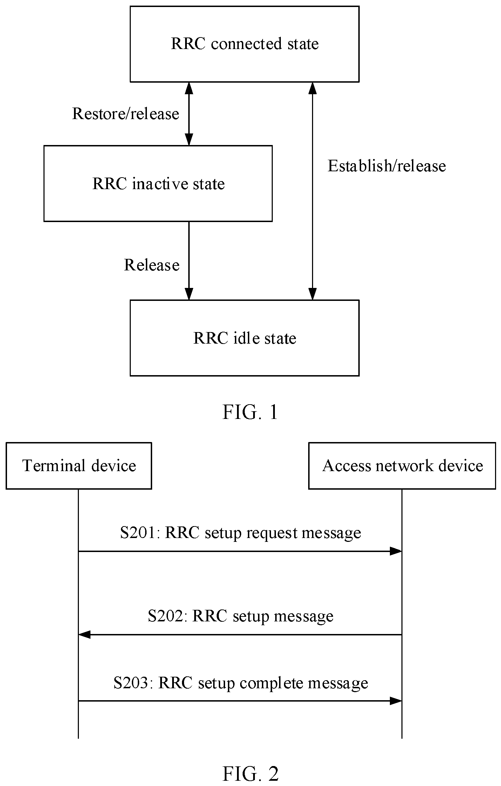

When a terminal device is in the connected state, links have been established between the terminal device and the access network device and between the terminal device and a core network device, and data can be directly transmitted to the terminal device when reaching a network. When the terminal device is in the inactive state, it indicates that the terminal device has established links with the access network device and the core network device before, but the link from the terminal device to the access network device is released. Although the link is released, the access network device and the terminal device store the context of the terminal device, and when data needs to be transmitted, the access network device can restore the link in time. When the terminal device is in the idle state, there is no link between the terminal device and the access network device and between the terminal device and the core network device. When data needs to be transmitted, the links from the terminal device to the access network device and the core network device need to be established. FIG. 1 shows transition among three states.

For example, as shown in FIG. 2, a signaling procedure of switching the terminal device from the idle state to the connected state may include the following steps.

S201: The terminal device sends an RRC setup request (RRC Setup Request) message to the access network device. S202: The access network device sends an RRC setup (RRC Setup) message to the terminal device.

S203: The terminal device sends an RRC setup complete (RRC Setup Complete) message to the access network device.

It should be noted that, with continuous development of technologies, the terms in embodiments of this application may change, but all the terms shall fall within the protection scope of this application.

To make objectives, technical solutions, and advantages of embodiments of this application clearer, the following further describes embodiments of this application in detail with reference to the accompanying drawings.

A communication method provided in this application may be applied to various communication systems. For example, the communication system may be an internet of things (internet of things, IoT), NB-IoT, or long term evolution (long term evolution, LTE), or may be a fifth generation (5G) communication system or a sixth generation (6G) communication system, or may be a hybrid architecture of LTE and 5G or a hybrid architecture of 5G and 6G, or may be a new communication system emerging in future communication development. Alternatively, the communication system may be a public land mobile network (public land mobile network, PLMN), a non-terrestrial network (non-terrestrial network, NTN), a device-to-device (device-to-device, D2D) network, V2X, a machine-to-machine (machine-to-machine, M2M) network, or another network.

Embodiments of this application are not only applicable to communication between an access network device and a terminal device, but also applicable to communication between access network devices, communication between terminal devices, communication in the internet of vehicles, the internet of things, an industrial internet, and a satellite communication network, and the like. In embodiments of this application, communication between the access network device and the terminal device is used as an example for description.

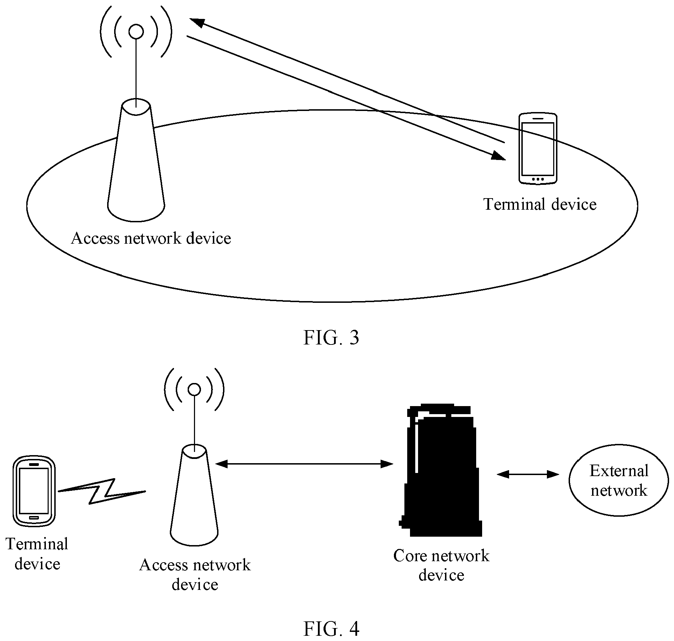

For example, FIG. 3 shows a communication system applicable to an embodiment of this application. The system may include an access network device and a terminal device. The access network device may send a signal to the terminal device, or the terminal device may send a signal to the access network device.

For example, FIG. 4 shows another communication system applicable to an embodiment of this application. The system may include an access network device, a terminal device, and a core network device. Optionally, the communication system may also include an external network (for example, a data network).

Embodiments of this application are applicable to both a homogeneous network scenario and a heterogeneous network scenario, and no limitation is imposed on a transmission point. Coordinated multipoint transmission may be performed between macro base stations, between micro base stations, or between a macro base station and a micro base station. Embodiments of this application are applicable to all frequency division duplex (frequency division duplex, FDD)/time division duplex (time division duplex, TDD) systems. Embodiments of this application may be applicable to a low-frequency scenario (for example, sub 6G), a high-frequency scenario (for example, above 6G), terahertz, optical communication, or the like.

Core network device: As a core part of a communication network, the core network device is mainly responsible for processing functions such as mobility management, session management, and data transmission of the terminal device. The access network device is a node in a radio access network (radio access network, RAN), and may also be referred to as a base station or a RAN node (or a device). Currently, examples of some access network devices are: a next generation NodeB (next generation NodeB, gNB), a next generation evolved NodeB (next generation evolved NodeB, Ng-eNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), a base band unit (base band unit, BBU), or a wireless fidelity (wireless fidelity, Wi-Fi) access point (access point, AP). Alternatively, the access network device may be a satellite, and the satellite may also be referred to as a high-altitude platform, a high-altitude aircraft, or a satellite base station. Alternatively, the access network device may be another device that has a function of a network device. For example, the access network device may alternatively be a device that functions as a network device in device-to-device (device-to-device, D2D) communication, internet of vehicles, or machine-to-machine (machine-to-machine, M2M). Alternatively, the access network device may be a 6G base station, a network device in a possible future communication system, or the like.

The access network device may be divided into a centralized network element (central unit, CU) and at least one distributed network element (distributed unit, DU). The CU may be configured to manage or control the at least one DU, which may also be referred to as that the CU is connected to the at least one DU. In this structure, a protocol layer of the access network device in the communication system may be split. A part of the protocol layer is centrally controlled by the CU, and functions of a remaining part or the whole protocol layer are distributed in the DU. The CU centrally controls the DU.

For example, the CU in embodiments of this application may be further divided into one control plane (CU-control plane, CU-CP) network element and a plurality of user plane (CU-user plane, CU-UP) network elements. The CU-CP may be used for control plane management, and the CU-UP may be used for user plane data transmission. An interface between the CU-CP and the CU-UP may be an El interface. An interface between the CU-CP and the DU may be F1-C, and is used for control plane signaling transmission. An interface between the CU-UP and the DU may be F1-U, and is used for user plane data transmission. The CU-UP and the CU-UP may be connected through an Xn-U interface, to perform user plane data transmission.

Terminal device: The terminal device is also referred to as user equipment (user equipment, UE), a mobile station (mobile station, MS), a mobile terminal (mobile terminal, MT), or the like, and is a device that provides voice and/or data connectivity for a user. For example, the terminal device includes a handheld device, a vehicle-mounted device, or the like that has a wireless connection function. Currently, the terminal device may be a mobile phone (mobile phone), a tablet computer, a notebook computer, a palmtop computer, a mobile internet device (mobile internet device, MID), a wearable device (for example, a smartwatch, a smart band, or a pedometer), a vehicle-mounted device (for example, a vehicle-mounted device on an automobile, a bicycle, an electric vehicle, an aircraft, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, a workshop device, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, an intelligent robot, a hot balloon, an uncrewed aerial vehicle, or an aircraft), or the like. The terminal device may alternatively be another device having a terminal function. For example, the terminal device may alternatively be a device functioning as a terminal function in D2D communication, the internet of vehicles, or M2M communication. In embodiments of this application, the terminal device and the access network device may be described as communication apparatuses. For differentiation, a first communication apparatus and a second communication apparatus may also be used for description.

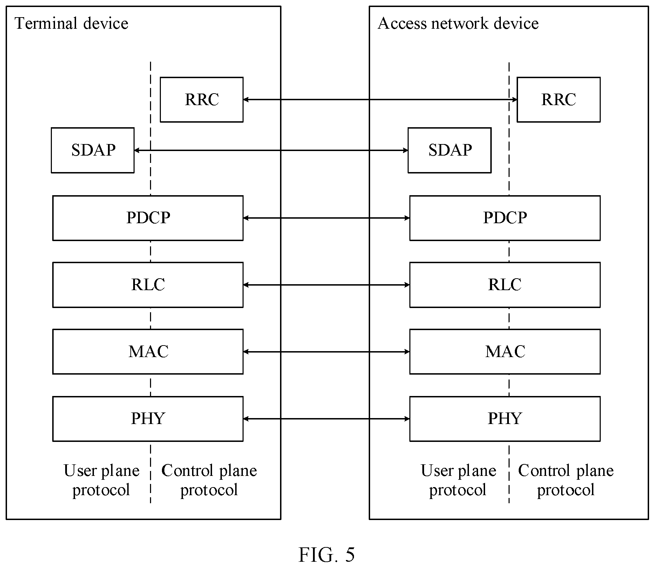

The terminal device and the access network device may include a user plane (user plane) protocol and a control plane (control plane) protocol. For example, the user plane protocol may include a physical layer (physical layer, PHY), a medium access control (medium access control, MAC) layer, a radio link control (radio link control, RLC) layer, a packet data convergence protocol (packet data convergence protocol, PDCP), and a service data adaptation protocol (service data adaption protocol, SDAP). The control plane protocol may include PHY, MAC, RLC, PDCP, and RRC. Layers of the terminal device and the access network device may be connected to each other to transfer information, as shown in FIG. 5.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

Three states are defined in NR, including an idle state, an inactive state, and a connected state. Currently, in the idle state, a terminal device cannot receive or send data. If the terminal device needs to receive or send the data, the terminal device needs to enter the connected state. In the inactive state, the terminal device cannot receive or send the data either. When the terminal device switches from the idle state to the inactive state or the connected state, if an effective range of a value of timing advance is exceeded or the terminal device enters the connected state for the first time, random access needs to be initiated. For example, a preamble (preamble) sequence is sent. The access network device feeds back a random access response, where the random access response carries the value of timing advance. If the preamble sequence is not user-specific, the terminal device needs to send a message 3 (Msg 3), and the access network device sends a message 4 to perform conflict resolution. In other words, the terminal device can enter the connected state only after four steps of random access are completed, and a delay is high.

In addition, a main scenario studied in NR is eMBB. Physical layer capabilities are defined for the eMBB, including data transmission methods and procedures in the connected state. In a scenario such as URLLC or an NB-IoT, a physical layer function is further improved and optimized based on a function defined by the eMBB. With development of the industry, in addition to the eMBB, other types of services are generated, such as URLLC, the NB-IoT, CPE, and V2X. As services become diversified, costs are high during large-scale production of various terminal devices, chip complexity is high, a signaling procedure is complex, and signaling overheads are high.

Based on this, embodiments of this application provide a communication method and apparatus, to resolve prior-art problems of high costs, high chip complexity, a complex signaling procedure, and high signaling overheads during large-scale production of the terminal device. The method and an apparatus are based on a same inventive concept. Because the method and the apparatus have a similar problem-resolving principle, for implementations of the apparatus and the method, refer to each other, and no repeated description is provided.

It should be understood that, in embodiments of this application, "at least one" means one or more, and " a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following pieces (items)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

It should be noted that, in this application, words "example" or "for example" are used to represent giving an example, an illustration, or a description. Any embodiment or design scheme described as an "example" or "for example" in this application should not be explained as being more preferred or having more advantages than another embodiment or design scheme. Exactly, use of the word such as "example" or "for example" is intended to present a relative concept in a specific manner

In embodiments of this application, "being used to indicate" may include "being used to directly indicate" and "being used to indirectly indicate". For example, when a piece of indication information is described as indicating information I, the indication information may directly indicate I or indirectly indicate I, but it does not necessarily indicate that the indication information carries I.

The following describes in detail the communication method provided in this application with reference to the accompanying drawings.

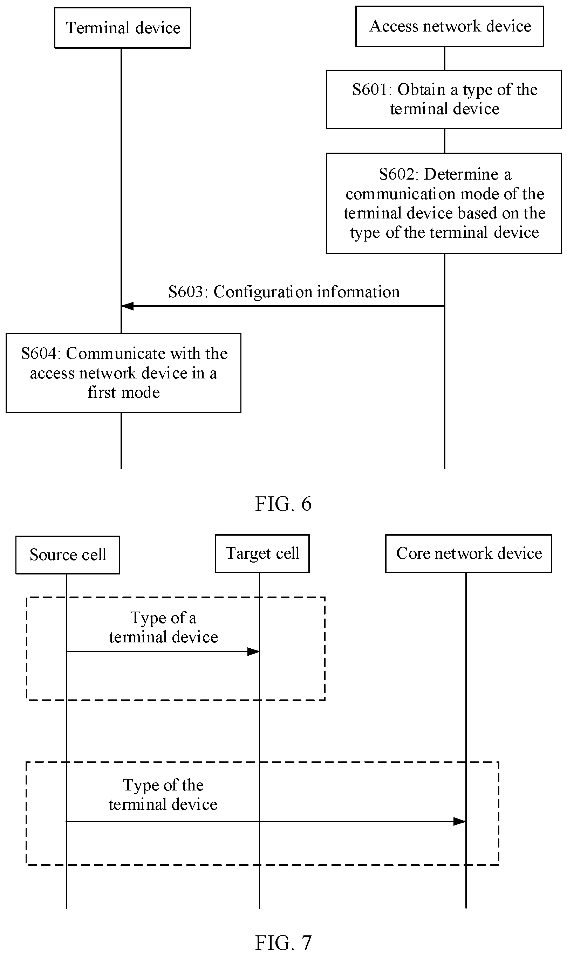

FIG. 6 shows a communication method according to an embodiment of this application. The method may be applied to communication between a terminal device and an access network device; may be applied to communication between terminal devices; may be applied to communication in the internet of vehicles, the internet of things, an industrial internet, a satellite communication network, and the like. In this embodiment of this application, communication between the access network device and the terminal device is used as an example for description.

For ease of understanding, this embodiment is described from perspectives the terminal device and the access network device. It should be understood that this does not constitute a limitation on this application. This application is improved on either of the terminal device or the access network device. Specifically, the method may be applied to the terminal device and the access network device, or may be applied to chips or chipsets/chip systems of the terminal device and the access network device. The following uses an example in which the method is applied to the terminal device and the access network device for description. The method may specifically include the following steps.

S601: An access network device obtains a type of a terminal device.

In an implementation, the terminal device may report the type of the terminal device to the access network device, so that the access network device obtains the type of the terminal device.

In another implementation, the terminal device may report the type of the terminal device to a core network device, and the core network device sends the type of the terminal device to the access network device, so that the access network can obtain the type of the terminal device.

In still another implementation, the core network device may alternatively obtain the type of the terminal device from subscription information of the terminal device, and send the type of the terminal device to the access network device. Further, how a UE side obtains a UE type may be that: the UE type is generated by the UE, or the UE type is configured by a gNB/CN for the UE.

In yet another implementation, the access network device may alternatively determine the type of the terminal device based on a historical communication record of the terminal device.

Optionally, in the foregoing four implementations, the terminal device may determine the type by itself, or the access network device or the core network device may configure the type for the terminal device.

For example, the type of the terminal device may be a type obtained through classification based on a service feature of the terminal device.

The service feature of the terminal device may include at least one of the following features: a service type (for example, NBIoT, mMTC, URLLC, IIoT, eMBB, V2X, XR/AR/VR, or wireless to the camera (wireless to the camera, WTTC)), a mobility static/low/high speed, a location of the terminal device (for example, a cell center/edge), an energy saving requirement (yes/no, high/medium/low/no), an amount of data (large/medium/small/no), a service period (periodic/non-periodic), uplink and downlink (uplink-only/downlink-only/uplink and downlink), a packet size (large packet/small packet), an uplink coverage requirement (uplink coverage enhancement/no enhancement), and the like.

Alternatively, the type of the terminal device may be a type obtained through classification based on a quality of service QoS level of a service of the terminal device. For example, the type of the terminal device may be a type obtained through classification when the QoS level of the terminal device is low/high delay, or may be a type obtained through classification when the QoS level of the terminal device is low/high reliability.

In an example description, in a cell handover scenario, the terminal device is handed over from a source cell to a target cell. After obtaining the type of the terminal device, the source cell may forward the type of the terminal device to the target cell. For example, if the source cell and the target cell belong to different access network devices, the source cell may send the type of the terminal device to the target cell through an interface (for example, an X2/Xn interface) between access network devices or by using the core network device, as shown in FIG. 7.

S602: The access network device determines a communication mode of the terminal device based on the type of the terminal device, where the communication mode includes a first mode.

It should be understood that, in a specific implementation, the communication mode may include one mode, or the communication mode may include a plurality of modes, for example, two modes or three modes.

In a possible implementation, the first mode included in the communication mode is used as an example. The access network device may determine a state of the first mode based on the type of the terminal device. For example, the access network device determines, based on the type of the terminal device, that the state of the first mode is one of an idle state, an inactive state, or a connected state; or determines, based on the type of the terminal device, that the state of the first mode is one of having an RRC connection or having no RRC connection.

The idle state may also be referred to as an RRC-idle state. In the idle state, there is no RRC connection between the terminal device and the access network device. The inactive state may also be referred to as an RRC-inactive state. In the inactive state, there is no RRC connection between the terminal device and the access network device, but the terminal device and the access network device retain context information of the terminal device. The connected state may also be referred to as an RRC-connected state. In the connected state, there is an RRC connection between the terminal device and the access network device.

Optionally, the communication mode may further include a second mode. The access network device may further determine a state of the second mode based on the type of the terminal device. For example, the access network device determines, based on the type of the terminal device, that the state of the second mode is one of the idle state, the inactive state, or the connected state; or determines, based on the type of the terminal device, that the state of the second mode is one of having the RRC connection or having no RRC connection.

The state of the second mode may be the same as or different from the state of the first mode. This is not specifically limited herein.

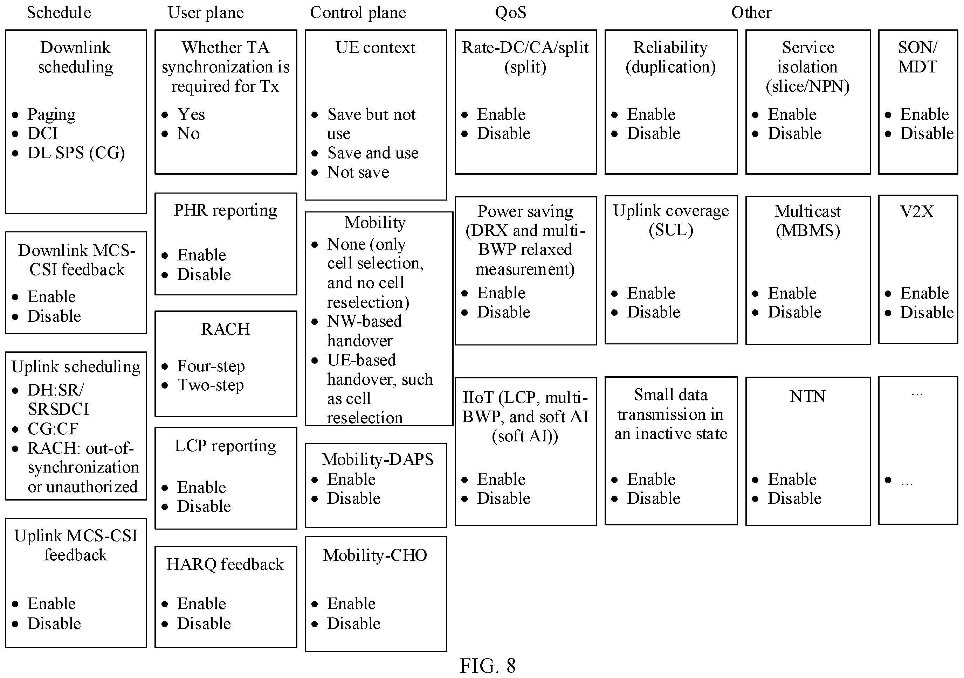

In an example, for an NB-IoT terminal device, the access network device may determine that the first mode of the terminal device is the idle state, and the second mode of the terminal device is the inactive state or the connected state. For an eMBB terminal, the access network device may determine that the first mode of the terminal device is the inactive state and the second mode is the connected state. For an URLLC terminal, the access network device may determine that the first mode of the terminal device is the connected state, and the second mode is the connected state. In another possible implementation, the first mode included in the communication mode is used as an example. The access network device may determine, based on the type of the terminal device, at least one piece of the following information of the first mode: a function set, a function parameter, and a resource parameter. The function set of the first mode includes one or more functions, and the function parameter may be a parameter of the function. For example, a function parameter of downlink scheduling may be a downlink scheduling manner, and the resource parameter is used to configure a transmission resource. For example, the resource parameter may be a time domain parameter, a frequency domain parameter, or the like. The following describes functions of the terminal device. As shown in FIG. 8, possible functions of the terminal device include the following.
(1) Downlink scheduling. The downlink scheduling may include but is not limited to manners such as paging (paging)/downlink control information (downlink control information, DCI)/downlink semi-persistent scheduling (downlink semi-static period schedule, DL SPS). Optionally, if the function set of the first mode includes downlink scheduling, a downlink scheduling manner may be configured by using the function parameter.
(2) Downlink CSI feedback. In an implementation, if the function set of the first mode includes the downlink CSI feedback, the first mode includes a downlink CSI feedback function. If the function set of the first mode does not include the downlink CSI feedback, the first mode does not include the downlink CSI feedback function. In another implementation, the function set of the first mode includes the downlink CSI feedback, and the function parameter indicates that the downlink CSI feedback is enabled/disabled.
(3) Uplink scheduling. The uplink scheduling may include but is not limited to manners such as a dynamic resource (dynamic grant, DG) (scheduling request (scheduling request, SR)/buffer status report (buffer status report, BSR)), a semi-persistent resource (configured grant, CG), and a random access channel (random access channel, RACH). Optionally, if the function set of the first mode includes uplink scheduling, an uplink scheduling manner may be configured by using the function parameter.
(4) Uplink sounding reference signal (sounding reference signal, SRS) transmission. In an implementation, if the function set of the first mode includes SRS transmission, the first mode includes an SRS transmission function. If the function set of the first mode does not include SRS transmission, the first mode does not include the SRS transmission function. In another implementation, the function set of the first mode includes SRS transmission, and the function parameter indicates that the SRS transmission function is enabled/disabled.
(5) Timing advance (timing advance, TA) synchronization. In an implementation, if the function set of the first mode includes TA synchronization, the first mode includes a TA synchronization function. If the function set of the first mode does not include TA synchronization, the first mode does not include the TA synchronization function. In another implementation, the function set of the first mode includes TA synchronization, and the function parameter indicates that the TA synchronization function is enabled/disabled.
(6) Power headroom report (power headroom report, PHR) reporting. In an implementation, if the function set of the first mode includes PHR reporting, the first mode includes a PHR reporting function. If the function set of the first mode does not include PHR reporting, the first mode does not include the PHR reporting function. In another implementation, the function set of the first mode includes PHR reporting, and the function parameter indicates that this PHR reporting function is enabled/disabled.
(7) RACH. The RACH may include but is not limited to manners such as a four-step RACH (4 step RACH)/a two-step RACH (2 step RACH), a contention RACH/a non-contention RACH. Optionally, if the function set of the first mode includes the RACH, the RACH manner may be configured by using the function parameter.
(8) Logical channel priority (logical channel prioritization, LCP). In an implementation, if the function set of the first mode includes the LCP, the first mode includes an LCP function. If the function set of the first mode does not include the LCP, the first mode does not include the LCP function. In another implementation, the function set of the first mode includes the LCP, and the function parameter indicates that the LCP function is enabled/disabled.
(9) Hybrid automatic repeat request (hybrid automatic repeat request, HARQ) feedback. In an implementation, if the function set of the first mode includes the HARQ feedback, the first mode includes the HARQ feedback. If the function set of the first mode does not include the HARQ feedback, the first mode does not include the HARQ feedback. In another implementation, the function set of the first mode includes the HARQ feedback, and the function parameter indicates that the HARQ feedback function is enabled/disabled.
(10) Terminal context (UE context) storage. The UE context storage may include but is not limited to: saving but not using, saving and using, and not saving. Optionally, if the function set of the first mode includes UE context storage, the UE context storage may be configured by using the function parameter.
(11) Mobility. Mobility may include but is not limited to: none, network-controlled handover, and UE autonomous handover. Optionally, if the function set of the first mode includes mobility, mobility may be configured by using the function parameter.
(12) Dual active protocol stack (dual active protocol stack, DAPS). In an implementation, if the function set of the first mode includes the DAPS, the first mode includes the DAPS. If the function set of the first mode does not include the DAPS, the first mode does not include the DAPS. In another implementation, the function set of the first mode includes the DAPS, and the function parameter indicates that a DAPS function is enabled/disabled.
(13) Condition handover (conditional handover, CHO). In an implementation, if the function set of the first mode includes CHO, the first mode includes the CHO. If the function set of the first mode does not include the CHO, the first mode does not include the CHO. In another implementation, the function set of the first mode includes the CHO, and the function parameter indicates that the CHO function is enabled/disabled.
(14) High rate (carrier aggregation (carrier aggregation, CA)/dual-connectivity (dual-connectivity, DC). In an implementation, if the function set of the first mode includes the high rate, the first mode includes a CA/DC function. If the function set of the first mode does not include the high rate, the first mode does not include the CA/DC function. In another implementation, the function set of the first mode includes the CA/DC, and the function parameter indicates that the CA/DC function is enabled/disabled.
(15) Energy saving (discontinuous reception (discontinuous reception, DRX), multi-bandwidth part (multi-bandwidth part, multi-BWP), and relaxed measurement). In an implementation, if the function set of the first mode includes energy saving, the first mode includes an energy saving function. If the function set of the first mode does not include the energy saving, the first mode does not include the energy saving function. In another implementation, the function set of the first mode includes energy saving, and the function parameter indicates that the energy saving function is enabled/disabled.
(16) Industrial internet of things (industrial internet of things, IIoT). In an implementation, if the function set of the first mode includes the IIoT, the first mode includes an IIoT function. If the function set of the first mode does not include the IIoT, the first mode does not include the IIoT function. In another implementation, the function set of the first mode includes the IIoT, and the function parameter indicates that the IIoT function is enabled/disabled.
(17) Reliability (duplication (duplication)). In an implementation, if the function set of the first mode includes reliability, the first mode includes a reliability function. If the function set of the first mode does not include the reliability, the first mode does not include the reliability function. In another implementation, the function set of the first mode includes the reliability, and the function parameter indicates that the reliability function is enabled/disabled.
(18) Uplink coverage enhancement (supplementary uplink, SUL). In an implementation, if the function set of the first mode includes uplink coverage enhancement, the first mode includes an uplink coverage enhancement function. If the function set of the first mode does not include the uplink coverage enhancement, the first mode does not include the uplink coverage enhancement function. In another implementation, the function set of the first mode includes uplink coverage enhancement, and the function parameter indicates that the uplink coverage enhancement function is enabled/disabled.
(19) Small data transmission (Small data transmission@inactive). In an implementation, if the function set of the first mode includes small data transmission, the first mode includes a small data transmission function. If the function set of the first mode does not include small data transmission, the first mode does not include the small data transmission function. In another implementation, the function set of the first mode includes small data transmission, and the function parameter indicates that the small data transmission function is enabled/disabled.
(20) Service isolation (non-public network (non-public network, NPN)/slice (Slice)). In an implementation, if the function set of the first mode includes service isolation, the first mode includes a service isolation function. If the function set of the first mode does not include service isolation, the first mode does not include the service isolation function. In another implementation, the function set of the first mode includes service isolation, and the function parameter indicates that the service isolation function is enabled/disabled.
(21) Multicast/multimedia broadcast multicast service (multimedia broadcast multicast service, MBMS). In an implementation, if the function set of the first mode includes multicast, the first mode includes a multicast function. If the function set of the first mode does not include multicast, the first mode does not include the multicast function. In another implementation, the function set of the first mode includes multicast, and the function parameter indicates that the multicast function is enabled/disabled.
(22) Non-terrestrial network (non-terrestrial network, NTN). In an implementation, if the function set of the first mode includes the NTN, the first mode includes an NTN function. If the function set of the first mode does not include the NTN, the first mode does not include the NTN function. In another implementation, the function set of the first mode includes the NTN, and the function parameter indicates that the NTN function is enabled/disabled.
(23) Self-optimizing network (self-optimizing networks, SON)/minimization of drive test (minimization of drive test, MDT). In an implementation, if the function set of the first mode includes the SON/MDT, the first mode includes an SON/MDT function. If the function set of the first mode does not include the SON/MDT, the first mode does not include the SON/MDT function. In another implementation, the function set of the first mode includes the SON/MDT, and the function parameter indicates that the SON/MDT function is enabled/disabled.
(24) V2X. In an implementation, if the function set of the first mode includes the V2X, the first mode includes a V2X function. If the function set of the first mode does not include the V2X, the first mode does not include the V2X function. In another implementation, the function set of the first mode includes the V2X, and the function parameter indicates that the V2X function is enabled/disabled.

Alternatively, division is performed based on the MAC/RLC/PDCP/SDAP/RRC, and functions of the terminal device may include the following functions.

### MAC layer function (for details, refer to the TS 38.321 protocol)

Logical channels (Logical Channels) Channels included in the logical channels are shown in Table 1.

**Table 1**

| Logical channel name (Logical channel name) | Abbreviation | Control channel (Control channel) | Transport channel (Traffic channel) |
|---|---|---|---|
| Broadcast control channel (Broadcast Control Channel) | BCCH | X | |
| Paging control channel (Paging Control Channel) | PCCH | X | |
| Common control channel (Common Control Channel) | CCCH | X | |
| Dedicated control channel (Dedicated Control Channel) | DCCH | X | |
| Dedicated transport channel (Dedicated Traffic Channel) | DTCH | | X |
| Sidelink broadcast control channel (Sidelink Broadcast Control Channel) | SBCCH | X | |
| Sidelink control channel (Sidelink Control Channel) | SCCH | X | |
| Sidelink transport channel (Sidelink Traffic Channel) | STCH | | X |

RACH procedure (2-step and 4-step; and contention-based and non-contention-based)
Downlink shared channel data transfer (DL-SCH data transfer)
Downlink assignment reception (DL Assignment reception)
Hybrid automatic repeat request operation (HARQ operation)
Disassembly and demultiplexing (Disassembly and demultiplexing)
Uplink shared channel data transfer (UL-SCH, data transfer)
Uplink grant reception (UL Grant reception)
Hybrid automatic repeat request operation (HARQ operation)
Multiplexing and assembly (Multiplexing and assembly)
Logical channel priority (Logical Channel Prioritization)
Multiplexing of media access control control elements and media access control service data units (Multiplexing of MAC Control Elements and MAC SDUs)
Scheduling request (Scheduling Request)
Buffer status report (buffer status report, BSR)
Dynamic power headroom report (Power Headroom Report)
Pre-emptive buffer status report (Pre-emptive Buffer Status Report)
Paging channel operation (PCH reception)
Broadcast channel operation (BCH reception)
Discontinuous reception (DRX)
Transmission and reception without dynamic scheduling (Transmission and reception without dynamic scheduling) Downlink (Downlink)
Uplink (Uplink)
Sidelink (Sidelink)
Activation and deactivation of a secondary cell/secondary serving cell (Activation/Deactivation of SCells)
Activation and deactivation of PDCP duplication (Activation/Deactivation of PDCP duplication)
MAC reconfiguration (MAC reconfiguration)
MAC reset (MAC Reset)
Processing of unknown, unforeseen, and erroneous protocol data (Handling of unknown, unforeseen and erroneous protocol data)
Handling of measurement gaps (Handling of measurement gaps)
BWP operation (BWP operation)
Downlink and uplink (Downlink and Uplink)
Sidelink (Sidelink)
SUL operation (SUL operation)
Beam failure detection and recovery procedure (Beam Failure Detection and Recovery procedure)
Data inactivity monitoring (Data inactivity monitoring)
Listen before talk operation (LBT operation)
Sidelink shared channel data transfer (SL-SCH Data transfer)
Sidelink broadcast channel data transfer (SL-BCH data transfer)
Sidelink broadcast channel data transmission (SL-BCH data transmission)
Sidelink broadcast channel data reception (SL-BCH data reception)
RLC layer function (for details, refer to the TS38.322 protocol)
RLC entity handling (RLC entity handling)
RLC entity establishment (RLC entity establishment)
RLC entity re-establishment (RLC entity re-establishment)
RLC entity release (RLC entity release)
Data transfer procedure (Data transfer procedures)
Transparent mode data transfer (TM data transfer)
Transmit operation (Transmit operations)
Receive operation (Receive operations)
Unacknowledged mode data transfer (UM data transfer)
Transmit operation (Transmit operations)
Receive operation (Receive operations)
Acknowledged mode data transfer (AM data transfer)
Transmit operation (Transmit operations)
Receive operation (Receive operations)
Actions when an acknowledged mode data protocol data unit is received from a lower layer (actions when an AMD PDU is received from lower layer)
Actions when an AMD PDU is placed in the reception buffer (Actions when an AMD PDU is placed in the reception buffer)
Actions when t-PollRetransmit timer expires (Actions when t-Reassembly expires) Automatic repeat acknowledgment procedure (ARQ procedures)
Retransmission (Retransmission)
Polling (Polling)
Transmission of an AMD PDU (Transmission of an AMD PDU) message
Reception of a status report (Reception of a STATUS report)
Expiry of t-PollRetransmit (Expiry of t-PollRetransmit)
Status report (Status report)
SDU discard procedure (SDU discard procedures)
Data volume calculation (Data volume calculation)
Exception handling (Handling of unknown, unforeseen and erroneous protocol data)
PDCP layer function (for details, refer to the TS38.323 protocol)
PDCP entity handling (PDCP entity handling)
PDCP establishment (PDCP entity establishment)
PDCP re-establishment (PDCP entity re-establishment)
PDCP release (PDCP entity release)
PDCP suspension (PDCP entity suspend)
PDCP reconfiguration (PDCP entity reconfiguration)
Data transfer (Data transfer)
Transmit operation (Transmit operation)
Receive operation (Receive operation)
Actions when a PDCP data PDU is received from a lower layer (Actions when a PDCP Data PDU is received from lower layers)
A t-Reordering timer expires (Actions when a t-Reordering expires)
Actions when a t-Reordering timer is reconfigured (Actions when the value of t-Reordering is reconfigured)
Sidelink transmit operation (Sidelink transmit operation)
Sidelink receive operation (Sidelink receive operation)
SDU discard (SDU discard)
Status report (Status report)
Transmit (Transmit operation)
Receive (Receive operation)
Data recovery (Data recovery)
Data volume calculation (Data volume calculation)
Header compression and decompression (Robust header compression and decompression)
Supported header compression protocols and configurations (Supported header compression protocols and profiles)
Configuration (Configuration of ROHC)
Protocol parameter (Protocol parameters)
ROCH header compression (Header compression using ROHC)
ROCH header decompression (Header decompression using ROHC)
PDCP control PDU for ROHC feedback (PDCP Control PDU for interspersed ROHC feedback)
Transmit (Transmit operation)
Receive (Receive operation)
Encryption and decryption (Ciphering and deciphering)
Integrity protection and verification (Integrity protection and verification)
PDCP duplication (PDCP duplication)
Activation/deactivation (Activation/Deactivation of PDCP duplication)
Duplicate packet discarding (Duplicate PDU discard)
Ethernet header compression and decompression (Ethernet header compression and decompression)
Header compression protocol (Supported header compression protocols)
Configuration of Ethernet header compression (Configuration of EHC)
Protocol parameter (Protocol parameters)
Ethernet header compression (Header compression using EHC)
Ethernet header decompression (Header decompression using EHC)
PDCP control PDU for Ethernet header compression feedback (PDCP Control PDU for EHC feedback)
Simultaneous configuration of dynamic header compression and Ethernet header compression (Simultaneous configuration of ROHC and EHC)
Uplink data switching (Uplink data switching)
SDAP layer function (for details, refer to the TS37.324 protocol)
SDAP entity handling (SDAP entity handling)
SDAP entity establishment (SDAP entity establishment)
SDAP entity release (SDAP entity release)
Data transfer (Data transfer)
Uplink (Uplink)
Downlink (Downlink)
Sidelink transmission (SL transmission)
Sidelink reception (SL reception)
QoS flow to DRB mapping (QoS flow to DRB mapping)
Configuration (Configuration)
Mapping diagram (Reflective mapping)
DRB release (DRB release)
RQI handling (RQI handling)
PC5 interface QoS flow to sidelink DRB (PC5 QoS flow to SL-DRB mapping)
Configuration (Configuration)
Sidelink DRB release (SL-DRB release)
Functions of an RRC layer (for details, refer to the TS38.331 protocol)
Idle (Idle) state
Receive MIB/SIB 1/SIBx
Receive paging
RRC connection establishment (first msg)
RRC reject (RRC Reject)
Inactive (Inactive) state
RRC resume (RRC Resume)
Connected (Connected) state
Security mode (Security Mode) configuration
DL direct transfer/UL direct transfer
UE capability query
Counter check (Counter Check)
Measurement report (Measurement Report)
RRC reconfiguration (first msg and HO complete msg)
RRC re-establishment (first msg)
RRC release (RRC release)
Handover command (HO CMD)
UE assistance info report
Location information report
Failure information (Failure Information) report
Cell selection and reselection (Cell selection/reselection) functions
Public land mobile network selection and standalone non-public network selection (PLMN selection and SNPN selection)
Cell selection and reselection (Cell selection and reselection)
Cell reservations and access restrictions (Cell Reservations and Access Restrictions)
Tracking area registration (Tracking Area registration)
RAN area registration (RAN Area registration)
Reception of broadcast information (Reception of broadcast information)
Paging (Paging)
Discontinuous reception for paging (Discontinuous Reception for paging)
Sidelink (Sidelink Operation)
NR sidelink communication and V2X sidelink communication (NR sidelink communication and V2X sidelink communication)
Cell selection and reselection for sidelink (Cell selection and reselection for Sidelink)

For example, the function set of the first mode may include at least one of the following functions: downlink scheduling, a downlink channel state information (channel state information, CSI) feedback, uplink scheduling, SRS transmission, TA synchronization, PHR reporting, a RACH, an LCP, a HARQ feedback, terminal context storage, mobility, a DAPS, conditional handover (conditional handover, CHO), a high rate, energy saving, an IIoT, reliability, uplink coverage enhancement, small data transmission, service isolation, multicast, a non-terrestrial network (non-terrestrial network, NTN), an SON/MDT, and V2X.

If the communication mode includes the second mode, the access network device may further determine, based on the type of the terminal device, at least one piece of the following information of the second mode of the terminal device: a function set, a function parameter, and a resource parameter.

For example, the function set of the second mode may include at least one of the following functions: downlink scheduling, a CSI feedback, uplink scheduling, SRS transmission, TA synchronization, PHR reporting, a RACH, an LCP, a HARQ feedback, terminal context storage, mobility, a DAPS, CHO, a high rate, energy saving, an IIoT, reliability, uplink coverage enhancement, small data transmission, service isolation, multicast, an NTN, an SON/MDT, and V2X.

The function set of the first mode and the function set of the second mode may include a same function, or may include different functions. This is not specifically limited herein.

For the same function in the function set of the first mode and the function set of the second mode, a function parameter of the function in the first mode may be the same as or different from a function parameter of the function in the second mode.

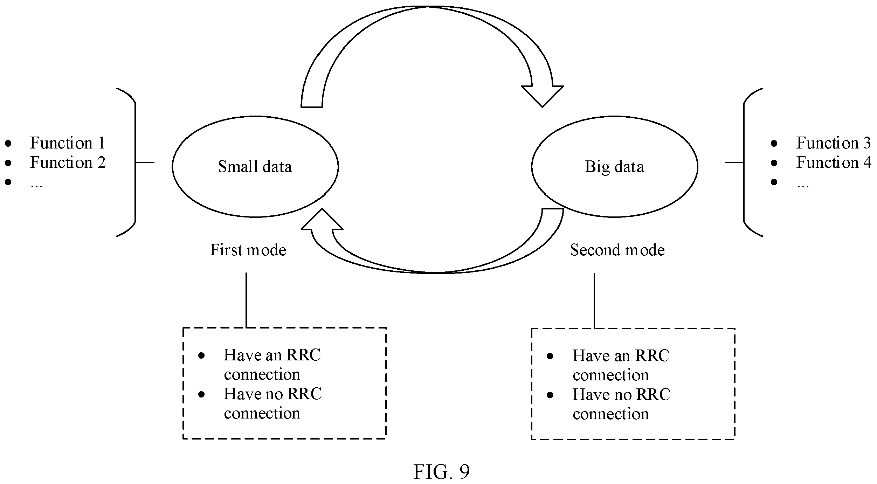

For example, the access network device may determine, based on the type of the terminal device, that the first mode of the terminal device is having an RRC connection or having no RRC connection, and that the first mode of the terminal device includes a function 1, a function 2, and the like; and that the second mode of the terminal device is having an RRC connection or having no RRC connection, and that the second mode of the terminal device includes a function 3, a function 4, and the like, as shown in FIG. 9.

In some embodiments, if the communication mode includes the first mode and the second mode, the access network device may further determine a condition for switching between the first mode and the second mode, for example, a condition for switching from the first mode to the second mode, and/or a condition for switching from the second mode to the first mode. For example, when an amount of data<a first threshold, the first mode is entered; or when an amount of data>a second threshold, the second mode is entered.

For example, functions included in the function sets corresponding to the first mode and the second mode may be different, or functions included in the function sets corresponding to the first mode and the second mode are the same but function parameters are different, or functions and function parameters included in the function sets corresponding to the first mode and the second mode are the same but resource parameters are different.

To better understand the method provided in embodiments of this application, the following describes different types of communication modes by using an example in which the communication mode includes the first mode and the second mode and an NBIoT terminal device, an eMBB terminal device, and a URLLC (IIoT) terminal device are combined. It should be understood that the following is merely an example for description, and does not specifically limit the type of the terminal device and a corresponding communication mode configuration.

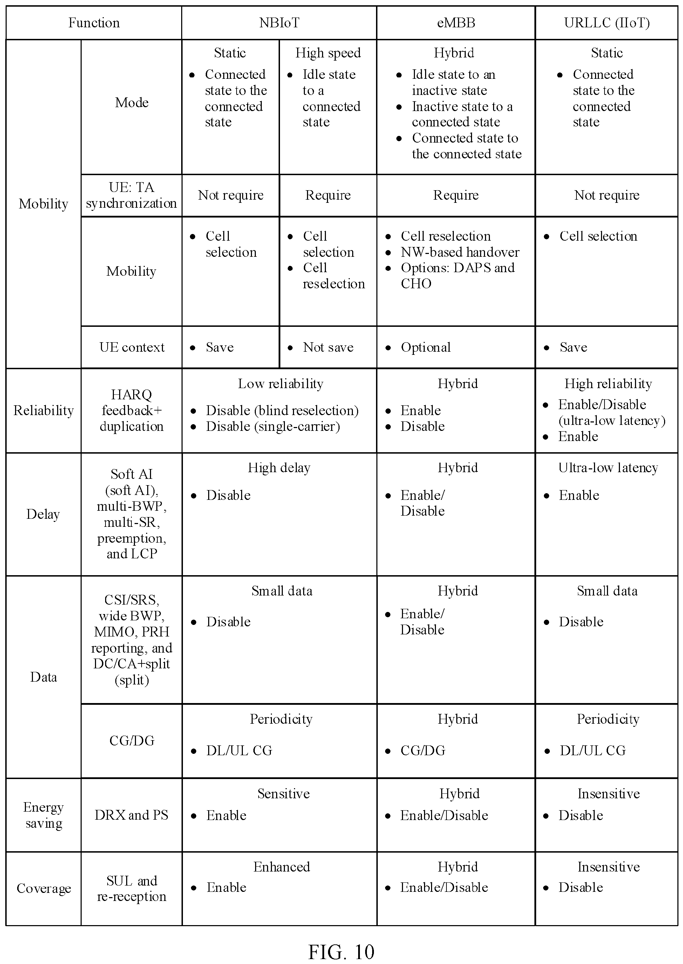

As shown in FIG. 10, for a static NBIoT terminal device, both a first mode and a second mode are in a connected state. Optionally, resources in the first mode and the second mode may be different.

Mobility of the static NBIoT terminal device is static. For mobility, functions included in both the first mode and the second mode are as follows: TA synchronization is not required, mobility is cell selection, and UE context storage is stored.

Reliability of the static NBIoT terminal device is low. For reliability, functions included in both the first mode and the second mode are HARQ feedback+duplication (Duplication), HARQ feedback is disabled during blind retransmission, and duplication is disabled during single-carrier transmission.

The static NBIoT terminal device has a large delay. For the delay, functions included in both the first mode and the second mode are soft AI, multi-BEP, multi-SR, preemption, and an LCP, and these functions are all disabled.

Data of the static NBIoT terminal device is small data. For the data, functions included in both the first mode and the second mode are CSI/SRS, wide BWP, multiple-input multiple-output (multiple-input multiple-output, MIMO), PHR reporting, DC/CA+split (split), and the like, and these functions are all disabled. Data of the static NBIoT terminal device is periodic data. For the data, the first mode further includes CG/DG, and the CG/DG is to enable DL/LTL CG. The static NBIoT terminal device is sensitive to energy consumption. For energy saving, functions included in both the first mode and the second mode are DRX and PS, and the two functions are enabled.

Coverage of the static NBIoT terminal device needs to be enhanced. For coverage, functions included in both the first mode and the second mode are SUL and repetition, and the two functions are enabled.

For a high-speed NBIoT terminal device, a first mode is an idle state, and a second mode is a connected state. Optionally, resources in the first mode and the second mode may be the same or may be different.

Mobility of the high-speed NBIoT terminal device is high. For mobility, functions included in both the first mode and the second mode are as follows: TA synchronization is required, mobility is cell selection and cell reselection, and UE context storage is not stored.

Reliability of the high-speed NBIoT terminal device is low. For reliability, functions included in both the first mode and the second mode are a HARQ feedback and duplication, the HARQ feedback is disabled during blind retransmission, and duplication is disabled during single-carrier transmission.

The high-speed NBIoT terminal device has a large delay. For the delay, functions included in both the first mode and the second mode are soft AI, multi-BEP, multi-SR, preemption, and an LCP, and these functions are all disabled.

Data of the high-speed NBIoT terminal device is small data. For data, functions included in both the first mode and the second mode are CSI/SRS, wide BWP, MIMO, PHR reporting, DC/CA, split, and the like, and these functions are all disabled. Data of the high-speed NBIoT terminal device is periodic data. For the data, the first mode further includes CG/DG, and the CG/DG is to enable DL/LTL CG.

The high-speed NBIoT terminal device is sensitive to energy consumption. For energy saving, functions included in both the first mode and the second mode are DRX and PS, and the two functions are enabled.

Coverage of the high-speed NBIoT terminal device needs to be enhanced. For coverage, functions included in both the first mode and the second mode are SUL and repeation, and the two functions are enabled.

For an eMBB terminal device, the first mode is an idle state, and the second mode is an inactive state. Optionally, resources in the first mode and the second mode may be the same or may be different. Alternatively, the first mode is an inactive state, and the second mode is a connected state. Optionally, resources of the first mode and the second mode may be the same or may be different. Alternatively, the first mode is the connected state, and the second mode is the connected state. Optionally, resources in the first mode and the second mode may be different.

For mobility, functions included in both the first mode and the second mode are as follows: TA synchronization is required, mobility is cell selection and NW-based handover, and UE context storage is optional. Optionally, the mobility may further include DAPS and CHO.

For reliability, functions included in the first mode and the second mode are both a HARQ feedback+duplication (Duplication), and the two functions are both disabled/enabled.

For a delay, functions included in both the first mode and the second mode are soft AI, multi-BWP, multi-SR, preemption, and an LCP, and these functions are all disabled.

For data, functions included in both the first mode and the second mode are CSI/SRS, wide BWP, MIMO, PHR reporting, DC/CA+split, and the like, and these functions are all disabled. For data, the first mode further includes CG/DG, and a CG/DG function is enabled.

For energy saving, functions included in the first mode and the second mode are both DRX and PS, and the two functions are enabled or disabled.

For coverage, functions included in the first mode and the second mode are both SUL and repetition, and the two functions are enabled or disabled.

For a URLLC (IIoT) terminal device, a first mode is a connected state, and a second mode is a connected state. Optionally, resources in the first mode and the second mode may be different.

For mobility, functions included in both the first mode and the second mode are as follows: TA synchronization is not required, mobility is cell selection, and UE context storage is saved.

For reliability, functions included in both the first mode and the second mode are a HARQ feedback+duplication, and the HARQ feedback is enabled/disabled. In an ultra-low delay, the HARQ feedback may be disabled, and duplication is enabled.

For a delay, functions included in both the first mode and the second mode are soft AI, multi-BEP, multi-SR, preemption, and an LCP, and these functions are all disabled.

For data, functions included in both the first mode and the second mode are CSI/SRS, wide BWP, MIMO, PHR reporting, DC/CA+PDCP split (split), and the like, and these functions are all disabled. For data, the first mode further includes CG/DG, and DL/LTL CG is enabled.

For energy saving, functions included in the first mode and the second mode are both DRX and PS, and the two functions are disabled.

For coverage, functions included in the first mode and the second mode are both SUL and repetition, and the two functions are disabled.

S603: The access network device sends configuration information to the terminal device, where the configuration information is used to configure the communication mode. Correspondingly, the terminal device receives the configuration information sent by the access network device.

In an example description, the configuration information may include an RRC state of the first mode. For example, the RRC state of the first mode may be an idle state, an inactive state, or a connected state. Alternatively, the first mode may be having an RRC connection or having no RRC connection.

Optionally, the configuration information may include at least one piece of the following information in the first mode: a function set, a function parameter, and a resource parameter.

If the communication mode further includes the second mode, the configuration information may further include an RRC state of the second mode. For example, the RRC state of the second mode may be an idle state, an inactive state, or a connected state. Alternatively, the second mode may be having an RRC connection or having no RRC connection. Optionally, the configuration information may include at least one piece of the following information in the second mode: a function set, a function parameter, and a resource parameter.

Optionally, the configuration information may further include a condition for switching between the first mode and the second mode. Therefore, when the condition for switching between the first mode and the second mode is met, the terminal device may switch between the first mode and the second mode.

According to the foregoing design, signaling overheads for mode switching can be reduced, so that energy saving of the terminal device can be implemented.

Optionally, the access network device may send the configuration information in one or a combination of the following several manners: RRC signaling, media access control control element (media access control control element, MAC CE), packet data convergence protocol (packet data convergence protocol, PDCP) configuration, radio link control (radio link control, RLC) configuration, service data adaptation protocol (service data adaption protocol, SDAP) configuration, system broadcast message (system information block, SIB), and physical layer (physical layer, PHY) signaling.

In an implementation, the access network device may send the configuration information to the terminal device by using dedicated signaling (for example, RRC). For example, the terminal device dedicated signaling may include:

```
            {
              Mode 1
               {
                 Function 1 (enabled/disabled)
                 Function 2 (enabled/disabled)
               }
              Mode 2
               {
                 Function 3 (enabled/disabled)
                  Function 4 (enabled/disabled)
               }
             }
```

In another implementation, the access network device may alternatively send the configuration information to the plurality of terminal devices by using common signaling (for example, system information (system information, SI)). Optionally, the common signaling may carry configuration information of each type of terminal device. Therefore, the terminal device determines the corresponding configuration information based on the service type of the terminal device.

For example, the common signaling may include:

```
            {
              UE type = type 1;
               {
                 Mode 1/state 1
                  {
                  Function 1 (enabled/disabled)
                  Function 2 (enabled/disabled)
                  }
                 Mode 2/state 2
                  {
                  Function 3 (enabled/disabled)
                    Function 4 (enabled/disabled)
                  }
              }
              UE type = type 2/...;
               {
                 Mode 1/state 1
                  {
                  Function 1 (enabled/disabled)
                    Function 2 (enabled/disabled)
                  }
                 Mode 2/state 2
                  {
                  Function 3 (enabled/disabled)
                    Function 4 (enabled/disabled)
                   }
                }
              }
```

S604: The terminal device communicates with the access network device in the first mode.

In an implementation, the terminal device may communicate with the access network device based on the RRC state of the first mode, and perform the function, the function parameter, the resource parameter, and the like that are included in the function set corresponding to the first mode.

Optionally, before step S601, the terminal device may send, to the access network device, a message used to request the configuration information. After receiving the message, the access network device sends the configuration information to the terminal device.

For example, when the terminal device is powered on for the first time, the terminal device may enter the first mode. If the first mode is not configured, the terminal device may actively initiate RRC connection establishment to the access network device, and request the configuration information. Alternatively, the terminal device may obtain each type of configuration information by reading common signaling, and determine corresponding configuration information based on the type of the terminal device.

For another example, when the terminal device enters the first mode in the out of coverage (out of coverage, OOC)/idle state, if the first mode is the connected state, the terminal device actively initiates RRC connection establishment to the access network device.

For another example, when the terminal device is in each mode, a function, a corresponding function parameter, and the like that are included in the function set of the model are executed or applied. For example, it is assumed that the first mode is the connected state. If the terminal device is powered off or OOC is performed, the terminal device may save the configuration information. Further, the saved configuration information may be used during next startup. For another example, it is assumed that the first mode is the connected state. The terminal device may also perform a terminal device based handover (UE based HO) function (for example, perform cell reselection).

In an implementation, if the communication mode includes a plurality of modes, the access network device may configure a default mode, for example, configure the first mode as the default mode. Alternatively, the protocol may specify a default mode. For example, the protocol specifies that the first mode is the default mode.

In a possible implementation, if the communication mode includes the first mode and the second mode, after receiving the configuration information, the terminal device performs mode switching between the first mode and the second mode. The mode switching may be determined by the terminal device, or may be indicated by the access network device. After completing switching between the modes, the terminal immediately applies configurations, such as a preconfigured function, a preconfigured function parameter, and a preconfigured resource parameter, corresponding to a mode obtained after the switching.

In an implementation, the terminal device may determine that a mode switching condition is met, and perform mode switching. The mode switching is switching from the first mode to the second mode, or the mode switching is switching from the second mode to the first mode.

Optionally, before or after performing mode switching, the terminal device may send, to the access network device, a message that indicates to perform mode switching.

In another implementation, the terminal device may determine that a mode switching condition is met, and send, to the access network device, a message used to request to perform mode switching. The terminal device performs mode switching after receiving a response message from the access network device. The mode switching is switching from the first mode to the second mode, or the mode switching is switching from the second mode to the first mode.

Optionally, the message used to request to perform mode switching may be sent by using signaling such as RRC/SIB/paging/SDAP/PDCP/RLC/MAC/PHY or any combination, or may be indicated by using a dedicated/common preamble, an SR, a sounding reference signal (sounding reference signal, SRS), or a CG/grant-free (grant free, GF) resource.

For example, the terminal device may determine, based on the switching condition included in the configuration information, that the mode switching condition is met. Alternatively, the terminal device may determine, when a timer expires, that the mode switching condition is met.

Optionally, the terminal device may further update (start/restart/stop) the timer, for example, start/restart the timer each time downlink data is received, or start/restart the timer each time DCI is received, or start/restart the timer each time downlink data and DCI are received, or start/restart the timer each time uplink data is received, or start/restart the timer each time uplink control information (uplink control information, UCI) scheduling information is received or UCI is sent, or start/restart the timer each time uplink data scheduling is received and/or UCI is sent, or start/restart the timer each time a HARQ feedback resource is received or a HARQ feedback is sent, or start/restart the timer each time uplink data scheduling and a HARQ feedback resource are received, or the like. The start/restart event of the timer may be determined by the terminal device, or may be configured by the access network device for the terminal device, or may be specified in a protocol.

A value of the timer may be configured by the access network device for the terminal device, or may be specified in the protocol, or may be determined by the terminal device.

In yet another implementation, the access network device may determine that a mode switching condition is met, and indicate the terminal device to perform mode switching. The mode switching is switching from the first mode to the second mode, or the mode switching is switching from the second mode to the first mode.

Optionally, after performing mode switching, the terminal device may send, to the access network device, a message that indicates to perform mode switching.

Optionally, the access network device may indicate, by using signaling such as RRC/SIB/paging/SDAP/PDCP/RLC/MAC/PHY or any combination, the terminal device to perform mode switching, or may indicate, by using a dedicated/common preamble, an SR, an SRS, and a CG/GF resource, the terminal device to perform mode switching.

Optionally, the access network device may further configure a start/restart event of the timer, for example, start/restart the timer each time downlink data is sent, or start/restart the timer each time DCI is sent, or start/restart the timer each time downlink data and DCI are sent, or start/restart the timer each time uplink data is received, or start/restart the timer each time uplink control information (uplink control information, UCI) is received, or start/restart the timer each time uplink data and UCI are received, or start/restart the timer each time a HARQ is received, or start/restart the timer each time uplink data and a HARQ are received. The start/restart event of the timer may be determined by the access network device, or may be configured by the terminal device for the access network device, or may be specified in a protocol.

The value of the timer may be configured by the terminal device for the access network device, or may be specified in a protocol, or may be determined by the access network device.

It should be noted that steps S601 to S603 in this embodiment of this application may be performed, or may not be performed. In an implementation, the access network device may determine, based on the type of the terminal device, to configure the communication mode of the terminal device. In this implementation, steps S601 to S603 may be performed. In another implementation, alternatively, the terminal device may configure the communication mode based on the type of the terminal device and report the communication mode to the access network device/core network device. In this implementation, steps S601 to S603 may not be performed. In an implementation in which the terminal device configures the communication mode based on the type of the terminal device and reports the communication mode to the access network device/core network device, a manner in which the terminal device configures the communication mode based on the type of the terminal device is similar to a manner in which the access network device configures the communication mode of the terminal device based on the type of the terminal device. For details, refer to step S602. Details are not described herein again.

Compared with that in the conventional technology in which a chip of the terminal device needs to be designed based on a service of the terminal device, in this embodiment of this application, each communication mode of the terminal device, for example, a state, a resource, a data transmission function, and a parameter corresponding to the function, may be configured based on a service feature or a QoS requirement of the terminal device, so that a function of the terminal device can match the service. Therefore, flexibility of the chip of the terminal device can be improved, complexity of the chip can be reduced, and production costs during large-scale production of various terminal devices can be reduced. The communication mode of the terminal device is decoupled from the function, so that the function of the terminal device can be flexibly customized based on a service.

In addition, according to the solution provided in this embodiment of this application, the terminal device may determine to perform mode switching, so that a signaling procedure can be reduced, and signaling overheads can be reduced.

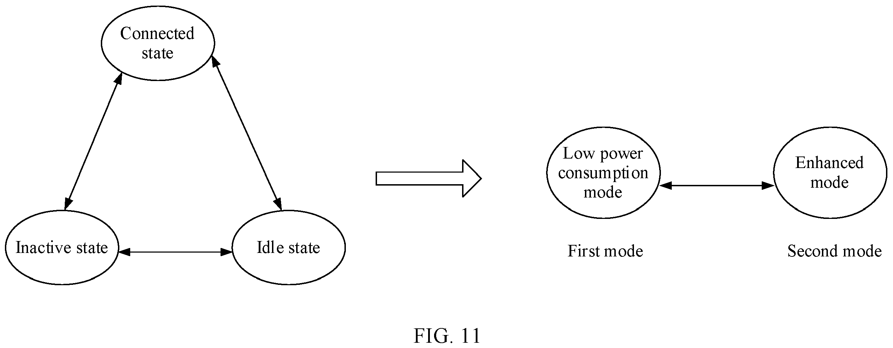

In this embodiment of this application, three states (an idle state/an inactive state/a connected state) in the conventional technology are changed to one state (for example, two connected state modes with different quantities of resources), or two states (for example, one idle state mode and one inactive state mode), as shown in FIG. 11, so that signaling overheads of mode switching can be reduced.

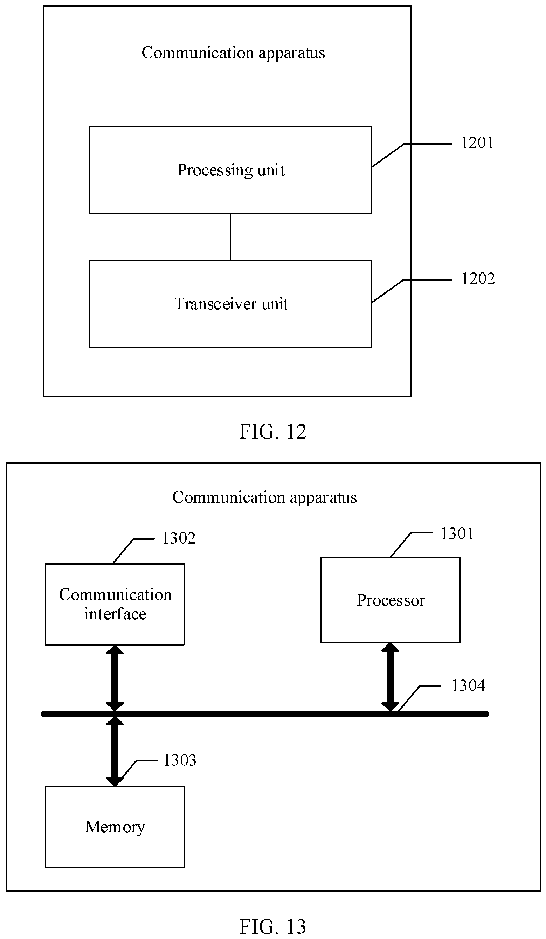

Based on a same technical concept as the method embodiments, an embodiment of this application provides a communication apparatus. A structure of the communication apparatus may be shown in FIG. 12, and includes a processing unit 1201 and a transceiver unit 1202. The transceiver unit 1202 may communicate with the outside, and the processing unit 1201 is configured to perform processing, for example, perform measurement. The transceiver unit 1202 may also be referred to as a communication interface, a transceiver unit, or a communication unit. The transceiver unit 1202 may be configured to perform an action performed by the terminal device in the foregoing method embodiment, or the transceiver unit 1202 may be configured to perform an action performed by the access network device in the foregoing method embodiment.

For example, the transceiver unit 1202 includes a sending module and/or a receiving module, respectively configured to perform sending and receiving steps of the access network device or the terminal device in the foregoing method embodiments.

In an implementation, the communication apparatus may be specifically configured to implement the method performed by the terminal device in Embodiment 1. The apparatus may be the terminal device, or may be a chip or a chipset in the terminal device, or a part of a chip that is configured to perform a related method function. The transceiver unit 1202 is configured to perform sending/receiving-related operations on the terminal device side in the foregoing method embodiments, and the processing unit 1201 is configured to perform processing-related operations of the terminal device in the foregoing method embodiments. For example, the transceiver unit 1202 is configured to receive configuration information, where the configuration information is used to configure a communication mode, and the communication mode includes a first mode. The processing unit 1201 is configured to communicate with the access network device in the first mode by using the transceiver unit 1202.

For example, the first mode is an idle state, an inactive state, or a connected state, or the first mode is having an RRC connection or having no RRC connection.

For example, the configuration information includes at least one piece of the following information in the first mode: a function set, a function parameter, and a resource parameter.

For example, the function set includes at least one of the following functions: downlink scheduling, a CSI feedback, uplink scheduling, SRS transmission, TA synchronization, PHR reporting, a RACH, an LCP, a HARQ feedback, terminal context storage, mobility, a DAPS, CHO, a high rate, energy saving, an IIoT, reliability, uplink coverage enhancement, small data transmission, service isolation, multicast, an NTN, an SON/MDT, and V2X.

Optionally, the transceiver unit 1202 is further configured to: before receiving the configuration information, report a type of the terminal device, where the type of the terminal device is a type obtained through classification based on a service feature of the terminal device, or a type obtained through classification based on a quality of service QoS level of a service of the terminal device.

Optionally, the communication mode further includes a second mode, and the second mode is different from the first mode.

Optionally, the processing unit 1201 is further configured to: determine that a mode switching condition is met, where the mode switching is switching from the first mode to the second mode, or the mode switching is switching from the second mode to the first mode; and perform mode switching.

For example, the configuration information further includes the condition for switching between the first mode and the second mode.

Optionally, the transceiver unit 1202 is further configured to receive a first message sent by the access network device, where the first message indicates to perform mode switching. The processing unit 1201 is further configured to perform mode switching, where the mode switching is switching from the first mode to the second mode, or the mode switching is switching from the second mode to the first mode.

Optionally, the transceiver unit 1202 is further configured to: before receiving the configuration information, send a second message to the access network device, where the second message is used to request the configuration information.

In another implementation, the communication apparatus may be specifically configured to implement the method performed by the access network device in the embodiments. The apparatus may be the access network device, or may be a chip or a chipset in the access network device, or a part of a chip that is configured to perform a related method function. The transceiver unit 1202 is configured to perform sending/receiving-related operations on the access network device side in the foregoing method embodiments, and the processing unit 1201 is configured to perform processing-related operations of the access network device in the foregoing method embodiments. For example, the processing unit 1201 is configured to: obtain a type of the terminal device; and determine a communication mode of the terminal device based on the type of the terminal device, where the communication mode includes a first mode. The transceiver unit 1202 is configured to send configuration information to the terminal device, where the configuration information is used to configure the communication mode.

For example, the first mode is an idle state, an inactive state, or a connected state, or the first mode is having an RRC connection or having no RRC connection.

For example, the configuration information includes at least one piece of the following information in the first mode: a function set, a function parameter, and a resource parameter.

For example, the function set includes at least one of the following functions: downlink scheduling, a CSI feedback, uplink scheduling, SRS transmission, TA synchronization, PHR reporting, a RACH, an LCP, a HARQ feedback, terminal context storage, mobility, a DAPS, CHO, a high rate, energy saving, an IIoT, reliability, uplink coverage enhancement, small data transmission, service isolation, multicast, an NTN, an SON/MDT, and V2X.

For example, the type of the terminal device is a type obtained through classification based on a service feature of the terminal device; or the type of the terminal device is a type obtained through classification based on a quality of service QoS level of a service of the terminal device.

Optionally, the communication mode further includes a second mode, and the second mode is different from the first mode.

Optionally, the configuration information further includes a condition for switching between the first mode and the second mode.

Optionally, the transceiver unit 1202 is further configured to send a first message to the terminal device, where the first message indicates to perform mode switching, where the mode switching is switching from the first mode to the second mode, or the mode switching is switching from the second mode to the first mode.

Optionally, the transceiver unit 1202 is further configured to: before sending the configuration information to the terminal device, receive a second message from the terminal device, where the second message is used to request the configuration information.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module. It may be understood that for functions or implementations of the modules in embodiments of this application, further refer to related descriptions in the method embodiments.

In a possible manner, the communication apparatus may be shown in FIG. 13. The communication apparatus may be a communication device or a chip in a communication device. The communication device may be a terminal device, or may be an access network device. The apparatus may include a processor 1301, a communication interface 1302, and may further include a memory 1303. The processing unit 1201 may be the processor 1301. The transceiver unit 1202 may be the communication interface 1302. It should be further understood that the transceiver unit 1202 may also be an input/output interface. In addition, a function of the transceiver unit 1202 may be implemented by a transceiver. The transceiver may include a transmitter and/or a receiver, to separately implement functions of the sending unit and the receiving unit.

In the input/output interface, the input corresponds to the receiving or obtaining operation, and the output corresponds to the sending operation.

The processor 1301 may be a central processing unit (central processing unit, CPU), a digital processing unit, or the like. The communication interface 1302 may be a transceiver, an interface circuit such as a transceiver circuit, a transceiver chip, or the like. The apparatus further includes a memory 1303, configured to store a program executed by the processor 1301. The memory 1303 may be a nonvolatile memory such as a hard disk drive (hard disk drive, HDD) or a solid-state drive (solid-state drive, SSD), or may be a volatile memory (volatile memory) such as a random-access memory (random-access memory, RAM). The memory 1303 is any other medium capable of carrying or storing expected program code in a form of instructions or data structures and capable of being accessed by a computer, but is not limited thereto.

The processor 1301 is configured to execute the program code stored in the memory 1303, and is specifically configured to perform an action of the processing unit 1201. Details are not described herein again in this application. The communication interface 1302 is specifically configured to perform an action of the transceiver unit 1202. Details are not described in this application again.

The communication interface 1302, the processor 1301, and the memory 1303 may communicate with each other through an internal connection path, to transfer a control and/or data signal. The memory 1303 is configured to store a computer program, and the processor 1301 is configured to invoke the computer program from the memory 1303 and run the computer program, to control the communication interface 1302 to receive and send a signal. Optionally, the communication apparatus may further include an antenna, configured to send, by using a radio signal, data, control signaling, information, or a message output by the communication interface 1302.

The processor 1301 and the memory 1303 may be integrated into one communication apparatus. The processor 1301 is configured to execute program code stored in the memory 1303, to implement the foregoing functions. During specific implementation, the memory 1303 may also be integrated into the processor 1301, or may be independent of the processor 1301. The processor 1301 may correspond to the processing unit in FIG. 12.

The communication interface 1302 may correspond to the transceiver unit in FIG. 12, and may also be referred to as a transceiver unit or a transceiver. The communication interface 1302 may include a receiver (or referred to as a receiver machine or a receiver circuit) and a transmitter (or referred to as a transmitter machine or a transmitter circuit). The receiver is configured to receive a signal, and the transmitter is configured to transmit a signal.

A specific connection medium between the communication interface 1302, the processor 1301, and the memory 1303 is not limited in this embodiment of this application. In this embodiment of this application, the memory 1303, the processor 1301, and the communication interface 1302 are connected to each other through a bus 1304 in FIG. 13. The bus is represented by using a bold line in FIG. 13. A connection manner between other components is merely an example for description, and is not limited thereto. The bus may be classified into an address bus, a data bus, a control bus, and the like. For ease of representation, only one bold line is used to represent the bus in FIG. 13, but this does not mean that there is only one bus or only one type of bus.

An embodiment of this application further provides a communication apparatus, including a processor and an interface. The processor may be configured to perform the method in the foregoing method embodiments.

It should be understood that the communication apparatus may be a chip. For example, the communication apparatus may be a field programmable gate array (field programmable gate array, FPGA), an application-specific integrated circuit (application-specific integrated circuit, ASIC), a system on chip (system on chip, SoC), a CPU, a network processor (network processor, NP), a digital signal processing circuit (digital signal processor, DSP), a micro controller unit (micro controller unit, MCU), a programmable logic device (programmable logic device, PLD), or another integrated chip.

For example, the interface may be an interface circuit. For example, the interface circuit may be a code/data read/write interface circuit. The interface circuit may be configured to receive code instructions (where the code instructions are stored in a memory and may be directly read from the memory, or may be read from the memory by using another component) and transmit the code instructions to the processor. The processor may be configured to run the code instructions to perform the method in the foregoing method embodiment.

For another example, the interface circuit may alternatively be a signal transmission interface circuit between the communication processor and the transceiver For example, in a sending scenario, the processor is configured to perform XX to obtain Y data (where XX is a non-air interface operation, and includes but is not limited to operations such as determining, decision, processing, calculation, searching, and comparison). The interface circuit may be configured to send the Y data to the transmitter (where the transmitter is configured to perform a sending operation on an air interface). For another example, in a receiving scenario, the interface circuit may be configured to receive Z data from the receiver (where the receiver is configured to perform a receiving operation on an air interface), and send the Z data to the processor. The processor is configured to perform XX processing on the Z data (where XX is a non-air interface operation, and includes but is not limited to operations such as determining, decision, processing, calculation, searching, and comparison).

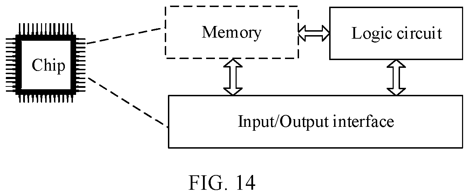

For example, FIG. 14 shows a possible chip structure. The chip includes a logic circuit and an input/output interface, and may further include a memory. The input/output interface may be configured to receive a code instruction (the code instruction is stored in the memory and may be directly read from the memory, or may be read from the memory by using another component) and transmit the code instruction to the logic circuit. The logic circuit may be configured to run the code instruction to perform the method in the foregoing method embodiment.

Alternatively, the input/output interface may be a signal transmission interface circuit between the logic circuit and the transceiver. For example, in a sending scenario, the logic circuit is configured to perform XX to obtain Y data (where XX is a non-air interface operation, and includes but is not limited to operations such as determining, decision, processing, calculation, searching, and comparison). The input/output interface may be configured to send the Y data to the transmitter (where the transmitter is configured to perform a sending operation on an air interface). For another example, in a receiving scenario, the input/output interface may be configured to receive Z data from the receiver (where the receiver is configured to perform a receiving operation on an air interface), and send the Z data to the logic circuit. The logic circuit is configured to perform XX processing on the Z data (where XX is a non-air interface operation, and includes but is not limited to operations such as determining, decision, processing, calculation, searching, and comparison).

An embodiment of the present invention further provides a computer-readable storage medium, configured to store computer software instructions that need to be executed by the foregoing processor, and the computer-readable storage medium includes a program that needs to be executed by the foregoing processor.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, wherein the method comprises:
receiving configuration information, wherein the configuration information is used to configure a communication mode, and the communication mode comprises a first mode; and
communicating with an access network device in the first mode.

2. The method according to claim 1, wherein the first mode is an idle state, an inactive state, or a connected state; or the first mode is having a radio resource control RRC connection or having no RRC connection.

3. The method according to claim 1 or 2, wherein the communicating with an access network device in the first mode comprises:
communicating with the access network device based on an RRC state of the first mode.

4. The method according to any one of claims 1 to 3, wherein the configuration information comprises at least one piece of the following information in the first mode: a function set, a function parameter, and a resource parameter.

5. The method according to claim 4, wherein the function set comprises at least one of the following functions: downlink scheduling, a downlink channel state information CSI feedback, uplink scheduling, uplink sounding reference signal SRS transmission, timing advance TA synchronization, power headroom report PHR reporting, a random access channel RACH, a logical channel priority LCP, a hybrid automatic repeat request HARQ feedback, terminal context storage, mobility, a dual active protocol stack DAPS, conditional handover CHO, a high rate, energy saving, an industrial internet of things IIoT, reliability, uplink coverage enhancement, small data transmission, service isolation, multicast, a non-terrestrial network NTN, a self-optimization network SON/minimization of drive test MDT, and vehicle-to-everything V2X.

6. The method according to claim 4 or 5, wherein the communicating with an access network device in the first mode comprises:
executing at least one piece of the following information in the first mode: the function set, the function parameter, and the resource parameter.

7. The method according to any one of claims 1 to 6, wherein before the receiving configuration information, the method further comprises:
reporting a type of a terminal device, wherein
the type of the terminal device is:
a type obtained through classification based on a service feature of the terminal device; or
a type obtained through classification based on a quality of service QoS level of a service of the terminal device.

8. The method according to any one of claims 1 to 7, wherein the communication mode further comprises a second mode, and the second mode is different from the first mode.

9. The method according to claim 8, wherein the method further comprises:
determining that a mode switching condition is met, wherein mode switching is switching from the first mode to the second mode, or mode switching is switching from the second mode to the first mode; and
performing the mode switching.

10. The method according to claim 9, wherein the configuration information further comprises the condition for switching between the first mode and the second mode.

11. The method according to claim 8, wherein the method further comprises:
receiving a first message sent by the access network device, wherein the first message indicates to perform mode switching; and
performing the mode switching, wherein the mode switching is switching from the first mode to the second mode, or the mode switching is switching from the second mode to the first mode.

12. The method according to claim 11, wherein the method further comprises:
after the mode switching is performed, sending a response message of the first message to the access network device.

13. The method according to any one of claims 1 to 12, wherein before the receiving configuration information, the method further comprises:
sending a second message to the access network device, wherein the second message is used to request the configuration information.

14. A communication method, wherein the method comprises:
obtaining a type of a terminal device;
determining a communication mode of the terminal device based on the type of the terminal device, wherein the communication mode comprises a first mode; and
sending configuration information to the terminal device, wherein the configuration information is used to configure the communication mode.

15. The method according to claim 14, wherein the first mode is an idle state, an inactive state, or a connected state; or the first mode is having a radio resource control RRC connection or having no RRC connection.

16. The method according to claim 14 or 15, wherein the configuration information comprises at least one piece of the following information in the first mode: a function set, a function parameter, and a resource parameter.

17. The method according to claim 16, wherein the function set comprises at least one of the following functions: downlink scheduling, a downlink channel state information CSI feedback, uplink scheduling, uplink sounding reference signal SRS transmission, timing advance TA synchronization, power headroom report PHR reporting, a random access channel RACH, a logical channel priority LCP, a hybrid automatic repeat request HARQ feedback, terminal context storage, mobility, a dual active protocol stack DAPS, conditional handover CHO, a high rate, energy saving, an industrial internet of things IIoT, reliability, uplink coverage enhancement, small data transmission, service isolation, multicast, a non-terrestrial network NTN, a self-optimization network SON/minimization of drive test MDT, and vehicle-to-everything V2X.

18. The method according to any one of claims 14 to 17, wherein the type of the terminal device is a type obtained through classification based on a service feature of the terminal device; or
the type of the terminal device is a type obtained through classification based on a quality of service QoS level of a service of the terminal device.

19. The method according to any one of claims 14 to 18, wherein the obtaining a type of a terminal device comprises:
receiving the type reported by the terminal device;
receiving the type of the terminal device sent by a core network device; or
determining the type of the terminal device based on a historical communication record of the terminal device.

20. The method according to any one of claims 14 to 19, wherein the communication mode further comprises a second mode, and the second mode is different from the first mode.

21. The method according to claim 20, wherein the configuration information further comprises a condition for switching between the first mode and the second mode.

22. The method according to claim 20, wherein the method further comprises:
sending a first message to the terminal device, wherein the first message indicates to perform mode switching, and the mode switching is switching from the first mode to the second mode, or the mode switching is switching from the second mode to the first mode.

23. The method according to claim 22, wherein the method further comprises:
after the first message is sent to the terminal device, receiving a response message of the first message.

24. The method according to any one of claims 14 to 23, wherein before the sending configuration information to the terminal device, the method further comprises:
receiving a second message from the terminal device, wherein the second message is used to request the configuration information.

25. A communication apparatus, wherein the apparatus comprises:
a transceiver unit, configured to receive configuration information, wherein the configuration information is used to configure a communication mode, and the communication mode comprises a first mode; and
a processing unit, configured to communicate with an access network device in the first mode by using the transceiver unit.

26. The apparatus according to claim 25, wherein the first mode is an idle state, an inactive state, or a connected state; or the first mode is having a radio resource control RRC connection or having no RRC connection.

27. The apparatus according to claim 25 or 26, wherein when communicating with the access network device in the first mode, the processing unit is specifically configured to:
communicate with the access network device based on an RRC state of the first mode.

28. The apparatus according to any one of claims 25 to 27, wherein the configuration information comprises at least one piece of the following information in the first mode: a function set, a function parameter, and a resource parameter

29. The apparatus according to claim 28, wherein the function set comprises at least one of the following functions: downlink scheduling, a downlink channel state information CSI feedback, uplink scheduling, uplink sounding reference signal SRS transmission, timing advance TA synchronization, power headroom report PHR reporting, a random access channel RACH, a logical channel priority LCP, a hybrid automatic repeat request HARQ feedback, terminal context storage, mobility, a dual active protocol stack DAPS, conditional handover CHO, a high rate, energy saving, an industrial internet of things IIoT, reliability, uplink coverage enhancement, small data transmission, service isolation, multicast, a non-terrestrial network NTN, a self-optimization network SON/minimization of drive test MDT, and vehicle-to-everything V2X.

30. The apparatus according to claim 28 or 29, wherein when communicating with the access network device in the first mode, the processing unit is specifically configured to:
execute at least one piece of the following information in the first mode: the function set, the function parameter, and the resource parameter.

31. The apparatus according to any one of claims 25 to 30, wherein the transceiver unit is further configured to: before receiving the configuration information, report a type of a terminal device, wherein
the type of the terminal device is:
a type obtained through classification based on a service feature of the terminal device; or
a type obtained through classification based on a quality of service QoS level of a service of the terminal device

32. The apparatus according to any one of claims 25 to 31, wherein the communication mode further comprises a second mode, and the second mode is different from the first mode.

33. The apparatus according to claim 32, wherein the processing unit is further configured to:
determine that a mode switching condition is met, wherein mode switching is switching from the first mode to the second mode, or mode switching is switching from the second mode to the first mode; and
perform the mode switching

34. The apparatus according to claim 33, wherein the transceiver unit is further configured to:
after the processing unit performs the mode switching, send a response message of the first message to the access network device

35. The apparatus according to claim 33 or 34, wherein the configuration information further comprises the condition for switching between the first mode and the second mode.

36. The apparatus according to claim 32, wherein the transceiver unit is further configured to receive a first message sent by the access network device, wherein the first message indicates to perform mode switching; and
the processing unit is further configured to perform the mode switching, wherein the mode switching is switching from the first mode to the second mode, or the mode switching is switch from the second mode to the first mode.

37. The apparatus according to any one of claims 25 to 36, wherein the transceiver unit is further configured to: before receiving the configuration information, send a second message to the access network device, wherein the second message is used to request the configuration information

38. A communication apparatus, wherein the apparatus comprises:
a processing unit, configured to: obtain a type of a terminal device; and determine a communication mode of the terminal device based on the type of the terminal device, wherein the communication mode comprises a first mode; and
a transceiver unit, configured to send configuration information to the terminal device, wherein the configuration information is used to configure the communication mode.

39. The apparatus according to claim 38, wherein the first mode is an idle state, an inactive state, or a connected state; or the first mode is having a radio resource control RRC connection or having no RRC connection

40. The apparatus according to claim 38 or 39, wherein the configuration information comprises at least one piece of the following information in the first mode: a function set, a function parameter, and a resource parameter.

41. The apparatus according to claim 40, wherein the function set comprises at least one of the following functions: downlink scheduling, a downlink channel state information CSI feedback, uplink scheduling, uplink sounding reference signal SRS transmission, timing advance TA synchronization, power headroom report PHR reporting, a random access channel RACH, a logical channel priority LCP, a hybrid automatic repeat request HARQ feedback, terminal context storage, mobility, a dual active protocol stack DAPS, conditional handover CHO, a high rate, energy saving, an industrial internet of things IIoT, reliability, uplink coverage enhancement, small data transmission, service isolation, multicast, a non-terrestrial network NTN, a self-optimization network SON/minimization of drive test MDT, and vehicle-to-everything V2X.

42. The apparatus according to any one of claims 38 to 41, wherein the type of the terminal device is a type obtained through classification based on a service feature of the terminal device; or
the type of the terminal device is a type obtained through classification based on a quality of service QoS level of a service of the terminal device

43. The apparatus according to any one of claims 38 to 42, wherein when obtaining the type of the terminal device, the processing unit is specifically configured to:
receive, by using the transceiver unit, the type reported by the terminal device;
receive, by using the transceiver unit, the type of the terminal device sent by a core network device; or
determine the type of the terminal device based on a historical communication record of the terminal device

44. The apparatus according to any one of claims 38 to 42, wherein the communication mode further comprises a second mode, and the second mode is different from the first mode; and
the configuration information further comprises a condition for switching between the first mode and the second mode.

45. The apparatus according to any one of claims 38 to 42, wherein the communication mode further comprises a second mode; and
the transceiver unit is further configured to send a first message to the terminal device, wherein the first message indicates to perform mode switching, and the mode switching is switching from the first mode to the second mode, or the mode switching is switching from the second mode to the first mode.

46. The apparatus according to claim 45, wherein the transceiver unit is configured to:
after sending the first message to the terminal device, receive a response message of the first message

47. The apparatus according to any one of claims 38 to 46, wherein the transceiver unit is further configured to: before sending the configuration information to the terminal device, receive a second message from the terminal device, wherein the second message is used to request the configuration information

48. A communication apparatus, comprising a processor, wherein the processor is coupled to a memory, the memory is configured to store a program or instructions, and when the program or the instructions is/are executed by the processor, the method according to any one of claims 1 to 13 is performed, or the method according to any one of claims 14 to 24 is performed.

49. A communication apparatus, comprising a logic circuit and an input/output interface, wherein
the input/output interface is configured to input configuration information, and the logic circuit is configured to perform the method according to any one of claims 1 to 13; or
the input/output interface is configured to output configuration information, and the logic circuit is configured to perform the method according to any one of claims 14 to 24.

50. A computer-readable storage medium, wherein the computer storage medium stores computer-readable instructions, and when the computer-readable instructions are run on a communication apparatus, the method according to any one of claims 1 to 13 is performed, or the method according to any one of claims 14 to 24 is performed.

51. A computer program product, wherein when the computer program product is run on a computer, the method according to any one of claims 1 to 13 is performed, or the method according to any one of claims 14 to 24 is performed.

52. A communication system, wherein the communication system comprises the apparatus according to claim 25 to 37 and the apparatus according to any one of claims 38 to 47.
